(19) **Europäisches Patentamt / European Patent Office / Office européen des brevets**

(11) **EP 4 778 945 A1**

(12) **EUROPEAN PATENT APPLICATION**
published in accordance with Art. 153(4) EPC

(43) Date of publication:
**22.07.2026 Bulletin 2026/30**

(21) Application number: **24865583.9**

(22) Date of filing: **17.09.2024**

(51) International Patent Classification (IPC):
**C08F 2/10** (2006.01)       **B01J 20/26** (2006.01)
**B01J 20/28** (2006.01)       **B01J 20/30** (2006.01)
**C08F 220/06** (2006.01)     **C08J 3/12** (2006.01)

(52) Cooperative Patent Classification (CPC):
**B01J 20/26; B01J 20/28; B01J 20/30; C08F 2/10;
C08F 220/06; C08J 3/12**

(86) International application number:
**PCT/JP2024/033084**

(87) International publication number:
**WO 2025/058084 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.09.2023 JP 2023150544**

(71) Applicant: Nippon Shokubai Co., Ltd.
**Osaka-shi, Osaka 541-0043 (JP)**

(72) Inventors:
• **WAKABAYASHI, Ryota**
  **Himeji-shi, Hyogo 671-1282 (JP)**
• **KANEKO, Jumpei**
  **Himeji-shi, Hyogo 671-1282 (JP)**
• **ADACHI, Yoshifumi**
  **Himeji-shi, Hyogo 671-1282 (JP)**
• **NODA, Atsuhiro**
  **Himeji-shi, Hyogo 671-1282 (JP)**
• **ISHIZAKI, Kunihiko**
  **Himeji-shi, Hyogo 671-1282 (JP)**

(74) Representative: **Hoffmann Eitle
Patent- und Rechtsanwälte PartmbB
Arabellastraße 30
81925 München (DE)**

(54) **WATER-ABSORBING RESIN AND METHOD FOR PRODUCING WATER-ABSORBING RESIN**

(57)     Provided is a water-absorbent resin that can sufficiently swell and gel by absorption of an aqueous liquid such as an antifreeze liquid even in a low-temperature environment, in which (a) a value of 0°C Vortex is 30 seconds or shorter, (b) a ratio of 0°C Vortex/30°C Vortex is 5 or less, (c) a GEX value is 17 or more, and (d) a value of CRC is a value exceeding 25 g/g.

**EP 4 778 945 A1**

**Description**

Technical Field

The present invention relates to a water-absorbent resin and a method for producing a water-absorbent resin.

Background Art

A water-absorbent resin (Super Absorbent Polymer: SAP) is a water-swellable, water-insoluble polymer gelling agent. The water-absorbent resin is used as a material for articles utilizing the property of being capable of absorbing a liquid such as water, such as a water retention agent for agriculture and horticulture and a water blocking agent for industry, and is used in various fields.

The water-absorbent resin may be produced from a raw material selected from a wide variety of monomers and hydrophilic polymers. As the water-absorbent resin, a water-absorbent resin containing a polymer composed of an acid group-containing unsaturated monomer as a main component is industrially produced in the largest amount from the viewpoint of water absorption performance.

Examples of the water-absorbent resin in the related art obtained using an acid group-containing unsaturated monomer include the following water-absorbent resins (A) to (C).

(A) A water-absorbent resin including a dried solid crosslinked polyacrylate, which is produced by heating a monomer composition including potassium acrylate, a divinyl compound, and a polymerization initiator, and having a monomer concentration of 55 to 80 wt.%, to perform a polymerization reaction and vaporize water (Patent Document 1);

(B) a highly water-absorbent resin produced by a production method sequentially including: a stage of neutralizing an acidic unsaturated monomer and a basic substance including a potassium base at a molar ratio within a range of 1 : 0.45 to 0.99 to produce an unsaturated monomer; and a stage of polymerizing the unsaturated monomer (Patent Document 2); and

(C) a highly water-absorbent resin including: a base resin powder including a first crosslinked polymer of a water-soluble ethylenically unsaturated monomer having an acidic group at least partially neutralized with a potassium salt; and a surface crosslinked layer formed on the base resin powder and including a second crosslinked polymer obtained by further crosslinking the first crosslinked polymer with a surface crosslinking agent (Patent Document 3).

Citation List

Patent Document

Patent Document 1: JP 58-071907 A
Patent Document 2: KR 10-1274880 B1
Patent Document 3: KR 10-2020-0073044 A

Summary of Invention

Technical Problem

Examples of the application of the water-absorbent resin include applications as materials such as a solidifying agent for (leaked or discarded) antifreeze liquid, a sandbag, and a solidifying agent for leaked water of nuclear power plant wastewater and the like. On the other hand, water-absorbent resins in the related art have a problem that they are difficult to swell and gel particularly in a low-temperature environment and cannot sufficiently function as the solidifying agent or the like. However, a water-absorbent resin capable of solving the above problems has not been provided so far.

The present invention has been made in view of such problems, and an object thereof is to provide a water-absorbent resin which can easily swell and gel by absorbing an aqueous liquid such as an antifreeze liquid even in a low-temperature environment, and can prevent the problems from occurring. Note that the term "swelling and gelling" means that the water-absorbent resin absorbs the aqueous liquid to become a swollen gel, thereby reducing the fluidity of the aqueous liquid.

Solution to Problem

As a result of intensive studies, the present inventors have found that the above-mentioned problems occur due to the fact that water absorption performance of the water-absorbent resin in the related art changes depending on an ambient temperature, and particularly, the performance is deteriorated in a low-temperature environment, and have arrived at the present invention.

A water-absorbent resin according to an embodiment of the present invention relates to a water-absorbent resin satisfying the following conditions (a) to (d).

(a) A value of 0°C Vortex is 30 seconds or less;
(b) a ratio of the value of 0°C Vortex to a value of 30°C Vortex (Vortex ratio (0°C/30°C)) is 5.0 or less;
(c) a GEX value is 17 or more; and
(d) a value of CRC is a value exceeding 25 g/g.

A method for producing a water-absorbent resin according to an embodiment of the present invention relates to a method for producing a water-absorbent resin, the method including a polymerization step of subjecting a monomer composition containing an acid group-containing unsaturated monomer and optionally containing a monomer other than the acid group-containing unsaturated monomer to crosslinking polymerization to obtain a crosslinked hydrogel polymer, wherein at least a part of the acid group-containing unsaturated monomer is a neutralized acid group-containing unsaturated monomer, the neutralized acid group-containing unsaturated monomer contains one or more salts selected from the group consisting of a potassium salt, a lithium salt, and an ammonium salt, a total content of the acid group-containing unsaturated monomer and the monomer other than the acid group-containing unsaturated monomer in the monomer composition is 30 mass% or more and less than 55 mass% with respect to a total mass of the monomer composition, and a polymerization initiation temperature in the polymerization step is 60°C or higher.

Advantageous Effects of Invention

The water-absorbent resin according to an embodiment of the present invention exhibits an effect of being capable of sufficiently swelling and gelling by absorbing an aqueous liquid such as an antifreeze liquid even in a low-temperature environment. The method for producing a water-absorbent resin according to an embodiment of the present invention also has an effect of producing a water-absorbent resin that can sufficiently swell and gel by absorbing an aqueous liquid such as an antifreeze liquid even in a low-temperature environment.

Description of Embodiments

Hereinafter, embodiments of the present invention will be described in detail. The present invention is not limited to the embodiments, and various modifications can be made within the described range, and embodiments obtained by appropriately combining technical means disclosed in different embodiments are also included in the technical scope of the present invention. Note that "acid (salt)" means "acid and/or a salt thereof", and "(meth)acrylic" means "acrylic and/or methacrylic". Furthermore, the mass of the water-absorbent resin is a numeric value in terms of solid content unless otherwise specified.

[1] Definition of Terms

[1-1] Water-absorbent resin

The term "water-absorbent resin" in the present specification refers to a water-swellable, water-insoluble polymeric gelling agent. To be specific, the water-absorbent resin refers to a polymeric gelling agent having a CRC value exceeding 25 g/g in terms of water swellability and Ext of 50 mass% or less in terms of water insolubility. The term "CRC" refers to a centrifuge retention capacity as defined by NWSP 241.0.R2 (15), and the term "Ext" refers to a water-soluble content as defined by NWSP 241.0.R2 (15). Note that "NWSP" will be described below.

The water-absorbent resin of the present invention may be a crosslinked polymer obtained by subjecting an acid group-containing unsaturated monomer to crosslinking polymerization, and may preferably be a crosslinked polymer obtained by subjecting an acid group-containing unsaturated monomer having a carboxy group to crosslinking polymerization. The crosslinked polymer may be a hydrophilic crosslinked polymer. The water-absorbent resin is not limited to a form in which the whole amount is a crosslinked polymer, and may be a composition containing an additive and the like as long as the above-mentioned physical properties (CRC and Ext) satisfy the numerical ranges described above.

The water-absorbent resin may be surface-crosslinked (also called post-crosslinked, or secondary-crosslinked) or may not be surface-crosslinked. Note that in the present specification, a water-absorbent resin that has been subjected to a predetermined surface-crosslinking treatment may be separately referred to as a "surface-crosslinked water-absorbent resin". The water-absorbent resin adjusted to have a predetermined moisture content and a predetermined particle size is also referred to as a water-absorbent resin powder or a water-absorbent agent.

[1-2] Fine powder

The term "fine powder" as used herein means a particulate or powdery water-absorbent resin that passes through a sieve having a mesh size of 150 $\mu$m when the entire water-absorbent resin of the present invention is classified using the sieve. The fine powder preferably means a fine powder including a water-absorbent resin containing a poly(meth)acrylic acid (salt)-based crosslinked polymer as a main component. The water-absorbent resin constituting the fine powder may be a surface-crosslinked water-absorbent resin or a water-absorbent resin that is not surface-crosslinked. The fine powder may contain water and/or an additive described in a step of adding another additive described below. That is, the fine powder is not limited to a fine powder composed of 100% of a water-absorbent resin (polymer having a moisture content of 0%), and may contain water and/or other trace components (e.g., inorganic fine particles) which are auxiliary materials of the water-absorbent resin.

[1-3] "Poly(meth)acrylic acid (salt)"

The term "poly(meth)acrylic acid (salt)" as used herein refers to poly(meth)acrylic acid and/or a salt thereof. The poly(meth)acrylic acid (salt) is a crosslinked polymer containing a structure derived from (meth)acrylic acid and/or a salt thereof (hereinafter, also referred to as "(meth)acrylic acid (salt)") as a repeating unit as a main component and containing a structure derived from an internal crosslinking agent as an optional component.

The "main component" means that the amount (content) of (meth)acrylic acid (salt) used is preferably from 50 mol% to 100 mol%, more preferably from 70 mol% to 100 mol%, still more preferably from 90 mol% to 100 mol%, and particularly preferably substantially 100 mol% with respect to the entire amount of the monomers used for polymerization. Note that the "main component" as used herein means that even in a case where the term is used for a substance other than (meth)acrylic acid (salt), the amount (content) of the substance used with respect to the entire amount of the composition containing the substance is within the above-described range.

Here, the poly(meth)acrylic acid (salt) contained in the water-absorbent resin is preferably a partially neutralized or completely neutralized poly(meth)acrylic acid salt, more preferably a monovalent salt, still more preferably an alkali metal salt or an ammonium salt, and particularly preferably one or more salts selected from the group consisting of a potassium salt, a lithium salt, and an ammonium salt.

[1-4] Definition of evaluation method

The "NWSP" stands for "Non-Woven Standard Procedures-Edition 2015". The NWSP was issued jointly by the European Disposables And Nonwovens Association (EDANA) and the Association of the Nonwoven Fabrics Industry (INDA) in the United States and Europe to standardize methods for evaluating nonwoven fabrics and products thereof, and includes standard measurement methods for water-absorbent resins. In the present specification, unless otherwise specified, the physical properties of the water-absorbent resin are measured in accordance with the "Non-Woven Standard Procedures-Edition 2015". As for an evaluation method not described in the NWSP, measurement is performed using methods and conditions described in Examples.

[1-4-1] "CRC" (NWSP 241.0.R2 (15))

"CRC" is an abbreviation of centrifuge retention capacity, and means an absorption capacity (sometimes referred to as "fluid retention capacity") (unit: g/g) of the water-absorbent resin for a 0.90 mass% sodium chloride aqueous solution under no pressure for 30 minutes. As a measurement method of "CRC", for example, a method described in Examples can be adopted.

[1-4-2] "PSD" (NWSP 220.0.R2 (15))

"PSD" is an abbreviation of particle size distribution and means a particle size distribution of a water-absorbent resin as measured by sieve classification. Note that examples of a parameter for indicating "PSD" include a mass-average particle size (D50) and logarithmic standard deviation ($\sigma\zeta$) of particle size distribution. As a measurement method of the D50 and the $\sigma\zeta$, for example, a method described in Examples, in particular, a method similar to the method described in "(3) Mass-Average Particle Size (D50) and Logarithmic Standard Deviations of Particle Size Distribution" in columns 27 to 28 of US 7638570 B can be adopted.

[1-4-3] "Moisture content and solid fraction" (NWSP 230.0.R2 (15))

The "moisture content" means a ratio (mass%) of a loss on drying of the water-absorbent resin to a mass before drying. The "solid fraction" is a ratio (mass%) of the mass after drying to the mass before drying. The moisture content and the solid content amount can be measured in accordance with the NWSP. As a method for measuring these, for example, the method described in Examples can be adopted.

In addition, in the present specification, the moisture content and the solid fraction of the hydrogel mean the moisture content and the solid fraction of the hydrogel before drying, respectively. The moisture content and the solid fraction of the hydrogel can be measured after a polymerization step and before a drying step described below. That is, the moisture content and the solid fraction of the hydrogel may be measured for the hydrogel before gel grinding or may be measured for the particulate hydrogel after gel grinding. The moisture content and the solid fraction of the hydrogel may be determined in accordance with the NWSP. As a method for measuring the moisture content and the solid fraction of the hydrogel, for example, a method described in Examples can be adopted.

[1-4-4] "0°C Vortex and 30°C Vortex"

In the present specification, "Vortex" is an indicator of the water absorption rate of a water-absorbent resin, and means a time (unit: second) required for 2 g of the water-absorbent resin to absorb 50 ml of 0.90 mass% sodium chloride aqueous solution to a predetermined state. "0°C Vortex" means the Vortex measured when the temperature of the sodium chloride aqueous solution is 0°C. "30°C Vortex" means the Vortex measured when the temperature of the sodium chloride aqueous solution is 30°C. The "0°C Vortex" and the "30°C Vortex" can be measured by, for example, the method described in Examples.

[1-4-5] "Ext" (NWSP 241.0.R2 (15))

"Ext" is an abbreviation for Extractables, and means a water-soluble content of a water-absorbent resin (amount of a water-soluble polymer in the water-absorbent resin). As a method for measuring the "Ext", for example, the method described in Examples can be employed.

[1-4-6] "GEX"

A "GEX value" is a value defined by the following equation (1) or equation (2), where y (g/g) is a centrifuge retention capacity (CRC) and x (mass%) is an amount of the water-soluble content Ext. In general, in the relationship between CRC and the water-soluble content, a water-absorbent resin having high CRC and a small water-soluble content is considered to be preferable; however, CRC and the water-soluble content behave differently from each other. Thus, the GEX value is defined to evaluate CRC and the water-soluble content by one parameter. A larger GEX value represents higher performance, which indicates less deterioration of physical properties.
For x > 1,

$$\text{GEX value} = (y + 17)/\ln(x) \cdots (1)$$

where ln(x) is the natural logarithm of x.
For x ≤ 1,

$$\text{GEX value} = (y)/(x) \cdots (2)$$

[1-4-7] Mass-Average Particle Size in terms of Solid Content (Solid D50) of Particulate Hydrogel

The term "mass-average particle size of the particulate hydrogel in terms of solid content" (hereinafter referred to as "Solid D50") as used herein means a mass-average particle size (D50), in terms of solid content, of the particulate hydrogel which is obtained by gel grinding to be described below. That is, the Solid D50 corresponds to the mass-average particle size of particles obtained when the particulate hydrogel is dried. As a method for measuring the Solid D50, for example, a method described in Examples can be adopted.

[1-4-8] "Amount of Residual Volatile Component"

An "amount of a residual volatile component" as used herein means an amount of a volatile component derived from an organic solvent or the like that is used in a production process of a water-absorbent resin (for example, a polymerization step or the like) and taken into the water-absorbent resin. Note that the volatile component is strongly fixed inside the water-absorbent resin. Thus, even when an environment around the water-absorbent resin is adjusted to an environment where the volatile component can be generally released by performing a treatment such as heating and/or depressurization, the volatile component is hardly released to the outside of the water-absorbent resin. On the other hand, when the water-absorbent resin is brought into contact with an aqueous liquid to form a swollen gel, a part of the volatile component is released from the inside of the water-absorbent resin. As a method for measuring the "amount of a residual volatile component", for example, a method described in Examples can be adopted.

[1-5] Others

In the present specification, "from X to Y" indicating a range means "X or more and Y or less". Unless otherwise noted, "t (ton)", a unit of mass, means "metric ton", and "ppm" means "mass ppm" or "weight ppm". Further, "acid (salt)" means "acid and/or a salt thereof", and "(meth)acrylic" means "acrylic and/or methacrylic". In addition, "liter" may be denoted as "l" or "L" for convenience. Furthermore, in a case of measuring a trace component, a value equal to or less than the detection limit is denoted as N.D. (Non Detected).

[2] First embodiment: Water-absorbent resin

The water-absorbent resin of the present invention satisfies the following conditions (a) to (d).

(a) A value of 0°C Vortex is 30 seconds or shorter;
(b) a ratio of the value of 0°C Vortex to a value of 30°C Vortex (Vortex ratio (0°C/30°C)) is 5 or less;
(c) a GEX value is 17 or more; and
(d) a value of CRC is a value greater than 25 g/g.

[2-1] Mechanism of water-absorbent resin of present invention

In one embodiment of the present invention, satisfying the condition (a) means that the water absorption rate of the water-absorbent resin is sufficiently high when the water-absorbent resin is caused to absorb an aqueous liquid having a temperature of 0°C. Here, "being caused to absorb an aqueous liquid having a temperature of 0°C" corresponds to setting the temperature around the water-absorbent resin to 0°C. Thus, the water absorption rate under the condition (a) corresponds to the water absorption rate of the water-absorbent resin in a low-temperature environment.

Satisfying the condition (b) means that the degree of decrease in water absorption rate of the water-absorbent resin is sufficiently small even in a case where the temperature of the aqueous liquid to be absorbed by the water-absorbent resin is changed from 30°C to 0°C. Here, the case where the temperature of the aqueous liquid to be absorbed by the water-absorbent resin is changed from 30°C to 0°C corresponds to a case where the temperature around the water-absorbent resin is changed from 30°C to 0°C. Thus, the above case corresponds to a case where the temperature of the environment in which the water-absorbent resin is present is changed from 30°C to 0°C. Note that in the present specification, the "low temperature" is not particularly limited, but means a temperature of 10°C or lower.

The water absorption performance such as the water absorption rate of the water-absorbent resin is usually deteriorated in a low-temperature environment. However, the water-absorbent resin of the present invention satisfies the conditions (a) and (b), and thus, even when the environmental temperature changes from normal temperature to low temperature, for example, the degree of deterioration of the water absorption rate is small, and the water absorption rate in a low-temperature environment is sufficiently high. Accordingly, the water-absorbent resin of the present invention is excellent in water absorption rate in a low-temperature environment, and can exhibit a stable water absorption rate even when the environmental temperature changes.

In one embodiment of the present invention, satisfying the condition (c) means that the value of CRC is sufficiently high and Ext is sufficiently small.

In one embodiment of the present invention, satisfying the condition (d) means that the value of CRC is sufficiently high.

The water-absorbent resin of the present invention satisfies the conditions (c) and (d), and thus can absorb a sufficient amount of an aqueous liquid (water, antifreeze liquid, leaked water, and the like), and when the water-absorbent resin absorbs water and becomes swollen, the amount of water-soluble content flowing out is small. That is, the water-absorbent resin of the present invention absorbs a sufficient amount of an aqueous liquid to swell and gel, and can reduce fluidity of the aqueous liquid and keep the aqueous liquid in a substantially solid state. In particular, the water-absorbent resin of the present invention satisfies the condition (d), and thus can exhibit sufficient water absorption performance even in a low-temperature environment. Accordingly, the water-absorbent resin of the present invention can satisfy the conditions (a) and (b).

As described above, the water-absorbent resin of the present invention satisfies the conditions (c) and (d), and thus has excellent water absorption performance at normal temperature, and also satisfies the conditions (a) and (b), and thus the excellent water absorption performance is not deteriorated even in a low-temperature environment. Accordingly, the water-absorbent resin of the present invention exhibits an effect of being capable of sufficiently absorbing an aqueous liquid such as an antifreeze liquid even in a low-temperature environment, and sufficiently swelling and gelling by absorbing the aqueous liquid.

[2-2] Physical property values of water-absorbent resin of present invention

[2-2-1] 0°C Vortex

A smaller value of 0°C Vortex of the water-absorbent resin of the present invention is more preferable from the viewpoint of increasing the water absorption rate in a low-temperature environment. The value is preferably 30 seconds or shorter, more preferably 20 seconds or shorter, and still more preferably 15 seconds or shorter. In addition, the value may be usually 1 second or longer, and is preferably 2 seconds or longer.

[2-2-2] Vortex Ratio (0°C/30°C)

A smaller value of the Vortex ratio (0°C/30°C) of the water-absorbent resin of the present invention is more preferable from the viewpoint of realizing a stable water absorption rate regardless of changes in the environmental temperature. The value is 5.0 or less, and preferably 4.0 or less. The value may be usually 1.0 or more, and is preferably 2.0 or more.

[2-2-3] 30°C Vortex

A smaller value of 30°C Vortex of the water-absorbent resin of the present invention is more preferable from the viewpoint of increasing the water absorption rate under an environment of 30°C. The value is, for example, preferably 20 seconds or shorter, and more preferably 10 seconds or shorter. In addition, the value may be usually 0.5 seconds or longer, and is preferably 1 second or longer.

[2-2-4] GEX

The GEX value of the water-absorbent resin of the present invention is preferably larger, because the water-absorbent resin can absorb and retain a sufficient amount of an aqueous liquid to thereby rapidly swell and gel. The value is 17 or more, and preferably 18 or more. In addition, the value may be usually 30 or less, and is preferably 28 or less.

[2-2-5] CRC

The value of CRC of the water-absorbent resin of the present invention is also preferably larger, because the water-absorbent resin can absorb and retain a sufficient amount of an aqueous liquid to thereby rapidly swell and gel. The value is a value exceeding 25 g/g, and is preferably 30 g/g or more. In addition, the value may be usually 50 g/g or less, and is preferably 45 g/g or less. The CRC of the water-absorbent resin of the present invention varies depending on various conditions such as polymerization conditions including a monomer concentration and a neutralization percentage, gel grinding conditions, drying conditions, and surface crosslinking conditions. In addition, by adjusting an amount of an internal crosslinking agent to be used depending on each of the conditions, CRC of the water-absorbent resin of the present invention can be adjusted to a value exceeding 25 g/g. Usually, the CRC of the obtained water-absorbent resin decreases when an amount of the internal crosslinking agent used increases, and the CRC of the obtained water-absorbent resin increases when the amount of the internal crosslinking agent used decreases. In detail, when the amount of the internal crosslinking agent used is small, a distance between crosslinking points of a crosslinked polymer constituting the obtained water-absorbent resin increases, and a network structure of the crosslinked polymer can be sufficiently expanded when water molecules are absorbed, and thus, the CRC of the water-absorbent resin increases.

[2-2-6] Ext

The Ext of the water-absorbent resin of the present invention is usually 1 mass% or more and 40 mass% or less, preferably 2 mass% or more and 35 mass% or less, more preferably 3 mass% or more and 30 mass% or less, still more preferably 4 mass% or more and 25 mass% or less, and particularly preferably 5 mass% or more and 20 mass% or less.

[2-2-7] Mass-Average Particle Size

The lower limit value of the mass-average particle size (D50) of the water-absorbent resin of the present invention is preferably 50 $\mu$m or more, more preferably 100 $\mu$m or more, still more preferably 150 $\mu$m or more, and particularly preferably 200 $\mu$m or more. The upper limit value of the mass-average particle size (D50) is preferably 600 $\mu$m or less, more preferably 550 $\mu$m or less, still more preferably 500 $\mu$m or less, and particularly preferably 450 $\mu$m or less. The water-absorbent resin of the present invention having a mass-average particle size (D50) within the above range can suitably improve its water absorption performance. As a method for measuring the mass-average particle size (D50), a method described in Examples described below, that is, a method similar to the method described in "(3) Mass-Average Particle Size (D50) and Logarithmic Standard Deviation of Particle Size Distribution" in columns 27 to 28 of US 7638570 B can be used.

[2-2-8] Particle size distribution

A proportion of particles having a particle size exceeding 850 $\mu$m in the water-absorbent resin of the present invention is preferably 5 mass% or less, more preferably 3 mass% or less, and still more preferably 1 mass% or less. The water-absorbent resin of the present invention contains particles having a particle size of 150 to 850 $\mu$m in an amount of preferably 90 mass% or more, more preferably 95 mass% or more, still more preferably 97 mass% or more, and particularly preferably 99 mass% or more. The water-absorbent resin of the present invention ideally contains 100 mass% of particles having a particle size of 150 to 850 $\mu$m. In the water-absorbent resin of the present invention, a logarithmic standard deviation ($\sigma\zeta$) of the particle size distribution is preferably 0.20 or more and 0.50 or less, more preferably 0.25 or more and 0.40 or less, and still more preferably 0.27 or more and 0.35 or less.

[2-3] Constituents of water-absorbent resin

[2-3-1] Crosslinked polymer

The water-absorbent resin of the present invention usually contains a crosslinked polymer of an acid group-containing unsaturated monomer, and preferably contains the crosslinked polymer as a main component. The crosslinked polymer is preferably a hydrophilic crosslinked polymer. Crosslinking polymerization for obtaining the crosslinked polymer may be crosslinking polymerization performed in the presence of a crosslinking agent (internal crosslinking agent), or may be crosslinking polymerization performed by self-crosslinking of a monomer. The crosslinked polymer may contain a monomer other than the acid group-containing unsaturated monomer as a monomer. Note that the term "monomer" as used herein is a concept including a neutralized salt, unless otherwise specified.

<Acid group-containing unsaturated monomer>

An "acid group" contained in the acid group-containing unsaturated monomer is not particularly limited, but examples thereof include a carboxy group, a sulfone group, and a phosphate group, and a carboxy group is preferable. Examples of the acid group-containing unsaturated monomer include (meth)acrylic acid, maleic acid (maleic anhydride), itaconic acid, cinnamic acid, vinyl sulfonic acid, allyl toluene sulfonic acid, vinyl toluene sulfonic acid, styrene sulfonic acid, 2-(meth)acrylamide-2-methylpropane sulfonic acid, 2-(meth)acryloyl ethane sulfonic acid, 2-(meth)acryloyl propane sulfonic acid, and 2-hydroxyethyl (meth)acryloyl phosphate. From the viewpoint of water absorption performance of the water-absorbent resin of the present invention, (meth)acrylic acid, maleic acid (maleic anhydride), itaconic acid, and cinnamic acid are preferable, and (meth)acrylic acid is more preferable.

In the water-absorbent resin of the present invention, at least a part of the acid group-containing unsaturated monomer may be a neutralized acid group-containing unsaturated monomer. The "neutralized acid group-containing unsaturated monomer" means a neutralized salt obtained by neutralizing the acid group.

It is preferable that a proportion (neutralization percentage) of the number of moles of the neutralized salt in the total number of moles of the acid group-containing unsaturated monomer is a predetermined value or more, from the viewpoint of making the CRC of the water-absorbent resin of the present invention more than 25 g/g. From this viewpoint, the neutralization percentage is preferably 40 mol% or more, more preferably 50 mol% or more, and still more preferably 60 mol% or more.

On the other hand, the upper limit of the neutralization percentage is 99 mol% or less.

The neutralized salt preferably contains a salt with a monovalent cation, more preferably contains one or more salts selected from an alkali metal salt, an ammonium salt, and an amine salt, and still more preferably contains one or more salts selected from an alkali metal salt and an ammonium salt.

Here, water absorption and water retention by the water-absorbent resin of the present invention are performed by dissociation of a cation from a neutralized acid group in the neutralized salt and coordination of a water molecule ($H_2O$) to the group after the dissociation. Thus, the more easily the cation is dissociated, the better the water absorption and water retention by the water-absorbent resin of the present invention are performed, and the more easily swelling and gelling are performed.

The dissociation is generally less likely to occur at a low temperature. Thus, at a low temperature, the state of swelling and gelling tends to differ significantly between when an easily dissociated cation is used and when a hardly dissociated cation is used.

Accordingly, by using a cation that is easily dissociated as the cation, the swelling and gelling of the water-absorbent resin of the present invention becomes easier, particularly in a low-temperature state. Thus, the water-absorbent resin of the present invention can improve the water absorption rate in a low-temperature environment by containing a cation that is easily dissociated as the cation.

Here, both the cation of potassium ($K^+$) and the cation of ammonium ($NH_4^+$) have a large ionic radius and a weak bond with the group after the dissociation, and thus correspond to cations that are easily dissociated. In addition, a cation of lithium ($Li^+$) has a small ionic radius but has a strong ionization tendency, and thus corresponds to a cation that is easily dissociated. For these reasons, the neutralized salt particularly preferably contains one or more salts selected from the group consisting of a potassium salt, a lithium salt, and an ammonium salt.

For the above-described reason, in a case where the neutralized salt contains a larger amount of a salt containing a cation that is easily dissociated, the water-absorbent resin of the present invention can further improve the water absorption rate in a low-temperature environment. From this viewpoint, a proportion of the number of moles of one or more salts selected from the group consisting of a potassium salt, a lithium salt, and an ammonium salt to the total number of moles of the neutralized salt is preferably 50 mol% or more, more preferably 60 mol% or more, and still more preferably 70 mol% or more. The upper limit value of the proportion of the number of moles of the one or more salts to the total number of moles of the neutralized salt may be 100 mol% or less, and is preferably 95 mol% or less, and more preferably 90 mol% or less.

A content of the acid group-containing unsaturated monomer with respect to the total amount of monomers serving as raw materials of the water-absorbent resin (acid group-containing unsaturated monomer + monomers other than acid group-containing unsaturated monomer) is preferably from 50 mol% to 100 mol%, more preferably from 70 mol% to 100 mol%, still more preferably from 90 mol% to 100 mol%, and particularly preferably substantially 100 mol%.

<Monomer other than acid group-containing unsaturated monomer>

The monomer other than the acid group-containing unsaturated monomer is a compound that can be polymerized to produce a water-absorbent resin. Examples of the monomer include amide group-containing unsaturated monomers such as (meth)acrylamide, N-ethyl (meth)acrylamide, and N,N-dimethyl (meth)acrylamide; amino group-containing unsaturated monomers such as N,N-dimethylaminoethyl (meth)acrylate, N,N-dimethylaminopropyl (meth)acrylate, and N,N-dimethylaminopropyl (meth)acrylamide; mercapto group-containing unsaturated monomers; phenolic hydroxy group-containing unsaturated monomers; and lactam group-containing unsaturated monomers such as N-vinylpyrrolidone.

<Internal crosslinking agent>

The crosslinked polymer may include an internal crosslinking agent, as necessary. The internal crosslinking agent is not particularly limited, and a known internal crosslinking agent may be used. A compound having a total of two or more unsaturated bonds or reactive functional groups in one molecule can be used.

Examples of the internal crosslinking agent include N,N'-methylenebis(meth)acrylamide, (poly)ethylene glycol di(meth)acrylate, (poly)propylene glycol di(meth)acrylate, trimethylolpropane tri(meth)acrylate, glycerin tri(meth)acrylate, glycerin acrylate methacrylate, ethylene oxide-modified trimethylolpropane tri(meth)acrylate, pentaerythritol hexa(meth)acrylate, triallyl cyanurate, triallyl isocyanurate, triallyl phosphate, triallylamine, poly(meth)allyloxyalkanes, (poly)ethylene glycol diglycidyl ether, glycerol diglycidyl ether, ethylene glycol, polyethylene glycol, propylene glycol, glycerin, 1,4-butanediol, pentaerythritol, ethylenediamine, ethylene carbonate, propylene carbonate, polyethyleneimine, and glycidyl (meth)acrylate. Among these, one or two or more thereof may be used in consideration of reactivity, and among these, a compound having two or more polymerizable unsaturated groups is preferably used.

An amount (content) of the internal crosslinking agent used is preferably 0.0001 mol% or more and 10 mol% or less, more preferably 0.001 mol% or more and 1 mol% or less, still more preferably 0.01 mol% or more and 0.2 mol% or less, with respect to the entire amount of the acid group-containing monomer.

When the amount of the internal crosslinking agent used is larger, the CRC of the obtained water-absorbent resin decreases, and when the amount of the internal crosslinking agent used is small, the CRC of the obtained water-absorbent resin increases. Specifically, in a case where the amount of the internal crosslinking agent used is small, the distance between crosslinking points of the crosslinked polymer constituting the obtained water-absorbent resin becomes long, the network structure of the crosslinked polymer can be sufficiently expanded when water molecules are absorbed, and thus, the CRC of the water-absorbent resin exhibits a high value. In the water-absorbent resin of the present invention, the amount (content) of the internal crosslinking agent used is as described above, and thus, the CRC is controlled to be a value exceeding 25 g/g.

[2-3-2] Surface crosslinking agent

The water-absorbent resin of the present invention may be a water-absorbent resin subjected to surface crosslinking. Thus, the water-absorbent resin of the present invention may contain a surface crosslinking agent. As the surface crosslinking agent, a surface crosslinking agent that can be generally used can be adopted, and the surface crosslinking agent can be a surface crosslinking agent that can react with a plurality of functional groups (preferably a plurality of carboxy groups) of the water-absorbent resin. The surface crosslinking agent may be preferably a surface crosslinking agent capable of forming a covalent bond or an ionic bond with the functional group, and more preferably a surface crosslinking agent capable of forming a covalent bond with the functional group.

Specific examples of the surface crosslinking agent include polyhydric alcohol compounds such as ethylene glycol, diethylene glycol, propylene glycol, triethylene glycol, tetraethylene glycol, polyethylene glycol, 1,3-propanediol, dipropylene glycol, 2,2,4-trimethyl-1,3-pentanediol, polypropylene glycol, glycerol, polyglycerol, 2-butene-1,4-diol, 1,3-butanediol, 1,4-butanediol, 1,5-pentanediol, 1,6-hexanediol, 1,2-cyclohexanedimethanol, 1,2-cyclohexanol, trimethylolpropane, diethanolamine, triethanolamine, polyoxypropylene, oxyethylene-oxypropylene block copolymers, pentaerythritol, and sorbitol; epoxy compounds such as ethylene glycol diglycidyl ether, polyethylene glycol diglycidyl ether, glycerol polyglycidyl ether, diglycerol polyglycidyl ether, polyglycerol polyglycidyl ether, propylene glycol diglycidyl ether, polypropylene glycol polyglycidyl ether, glycidol, sorbitol polyglycidyl ether, pentaerythritol polyglycidyl ether, trimethylolpropane polyglycidyl ether, neopentylglycol diglycidyl ether, and 1,6-hexanediol diglycidyl ether; polyamine compounds such as ethylenediamine, diethylenetriamine, triethylenetetramine, tetraethylenepentamine, pentaethylenehexamine, and polyethylenimine, and inorganic salts or organic salts thereof; polyisocyanate compounds such as 2,4-tolylene diisocyanate and hexamethylene diisocyanate; aziridine compounds such as polyaziridine; polyoxazoline compounds such as 1,2-ethylenebisoxazoline, bisoxazoline, and polyoxazoline; carbonic acid derivatives such as urea, thiourea, guanidine, dicyandiamide, and 2-oxazolidinone; alkylene carbonate compounds such as 1,3-dioxolan-2-one, 4-methyl-1,3-dioxolan-2-one, 4,5-dimethyl-1,3-dioxolan-2-one, 4,4-dimethyl-1,3-dioxolan-2-one, 4-ethyl-1,3-dioxolan-2-one, 4-hydroxymethyl-1,3-dioxolan-2-one, 1,3-dioxan-2-one, 4-methyl-1,3-dioxan-2-one, 4,6-dimethyl-1,3-dioxan-2-one, and 1,3-dioxopan-2-one; haloepoxy compounds such as epichlorohydrin, epibromohydrin, and $\alpha$-methylepichlor-ohydrin, and polyamine adducts thereof; oxetane compounds; silane coupling agents such as $\gamma$-glycidoxypropyltrimethox-ysilane and $\gamma$-aminopropyltriethoxysilane; and polyvalent metal compounds such as hydroxides, chlorides, sulfates, nitrates, and carbonates of zinc, calcium, magnesium, aluminum, iron, and zirconium. Among these, two or more types may be used in combination. Among the surface crosslinking agents, one, or two or more selected from a polyvalent metal ion, an epoxy compound, an oxazoline-based compound, and an alkylene carbonate compound are preferable.

In a case where the water-absorbent resin of the present invention contains a surface crosslinking agent, a content of the surface crosslinking agent is preferably 0.005 mass% or more and 5 mass% or less, more preferably 0.01 mass% or more and 4 mass% or less, and still more preferably 0.02 mass% or more and 3 mass% or less with respect to the total mass of the water-absorbent resin.

[2-3-3] Fine powder

The water-absorbent resin of the present invention may contain the fine powder. A content of the fine powder is preferably 15 mass% or less, more preferably 10 mass% or less, and still more preferably 5 mass% or less with respect to the total mass of the water-absorbent resin. Further, the content of the fine powder is particularly preferably 0 mass%. As a method for controlling the content to be a specific value (for example, 15 mass%) or less, a method of removing fine powder generated as a by-product by performing a classification step described below during production can be exemplified.

When the content is 15 mass% or less with respect to the total mass of the water-absorbent resin, it is possible to prevent a decrease in water absorption performance of the water-absorbent resin of the present invention. Note that the content indicates a proportion of the water-absorbent resin that passes through a sieve having a mesh size of 150 $\mu$m.

[2-3-4] Residual volatile component

In the water-absorbent resin of the present invention, a content of the residual volatile component is preferably 0.4 mass% or less with respect to the total mass of the water-absorbent resin. With the configuration, the water-absorbent resin of the present invention has an advantage that it is possible to reduce an uncomfortable feeling due to an odor during water absorption and a decrease in absorption performance due to hydrophobicity.

From the viewpoint of easily obtaining the above-described advantage, in the water-absorbent resin of the present invention, the content of the residual volatile component is more preferably 0.2 mass% or less with respect to the total mass of the water-absorbent resin, and it is particularly preferable that the water-absorbent resin of the present invention is substantially free of the residual volatile component. Here, the phrase "is substantially free of the residual volatile component" means that the amount of the residual volatile component obtained by a measurement method described below is "undetectable".

As described above, the residual volatile component is derived from an organic solvent or the like used in polymerization or the like during the production process. Thus, the water-absorbent resin that is substantially free of the residual volatile component can be produced by, for example, the polymerization step described below without an organic solvent or the like, such as aqueous solution polymerization, and the other steps without an organic solvent or the like similarly.

In addition, even in a case of using an organic solvent or the like in the production process, the content of the residual volatile component can be set to the above-described preferable range by reducing the amount of the organic solvent used.

[2-3-5] Polyhydric alcohol

The water-absorbent resin of the present invention is preferably substantially free of a polyhydric alcohol. Here, the phrase "is substantially free of a polyhydric alcohol" means that the measurement result of the polyhydric alcohol in the water-absorbent resin of the present invention is "undetectable". The water-absorbent resin of the present invention has an advantage that it can reduce an uncomfortable feeling due to an odor during water absorption by being substantially free of the polyhydric alcohol.

The polyhydric alcohol can be generally used as a crosslinking agent (internal crosslinking agent, surface crosslinking agent) in the process for producing a water-absorbent resin. Thus, the water-absorbent resin substantially free of the polyhydric alcohol can be produced by a process not using a polyhydric alcohol, for example, a process using a compound other than a polyhydric alcohol as a crosslinking agent. In a case where the water-absorbent resin of the present invention contains a polyhydric alcohol, the content thereof is preferably 5 mass% or less, and more preferably 3 mass% or less, with respect to the total mass of the water-absorbent resin.

[2-3-6] Other additives

The water-absorbent resin of the present invention may contain another additive in addition to the above-mentioned constituents. As the additive, an additive that can be generally contained in a water-absorbent resin can be used, and there is no particular limitation. Examples of the additive include a chelating agent, an organic reducing agent, an inorganic reducing agent, an oxidizing agent, a hydroxycarboxylic acid compound, a surfactant, a compound having a phosphorus atom, an organic powder such as metal soap, a deodorant, an antimicrobial agent, pulp, a thermoplastic fiber, a polyvalent metal salt, a cationic polymer, and an inorganic fine particle. The additive may be one or a mixture of two or more of the above-described additives. A content of the additive is not particularly limited as long as the content does not impair the function of the water-absorbent resin of the present invention, and is preferably 5 mass% or less, and more preferably 3 mass% or less, with respect to the total mass of the water-absorbent resin.

<Polyvalent metal salt>

In a case where the water-absorbent resin of the present invention contains a polyvalent metal salt as the other additive, preferable examples of the polyvalent metal of the polyvalent metal salt include aluminum and zirconium. The polyvalent metal salt that can be used is preferably aluminum lactate or aluminum sulfate, and more preferably aluminum sulfate.

As a content (addition amount) of the polyvalent metal salt, with respect to 1 g of the water-absorbent resin (water-absorbent resin powder), an amount of the metal cation is preferably less than $3.6 \times 10^{-5}$ mol, more preferably less than $2.8 \times 10^{-5}$ mol, and still more preferably less than $2.0 \times 10^{-5}$ mol. Here, the water-absorbent resin (water-absorbent resin powder) means a water-absorbent resin that does not contain the other additive.

<Cationic polymer>

In a case where the water-absorbent resin of the present invention contains a cationic polymer as the other additive, preferable examples of the cationic polymer include compounds exemplified in US 7098284 B. Among the compounds exemplified in US 7098284 B, a vinylamine polymer is preferred. A content (addition amount) of the cationic polymer is preferably less than 2.5 parts by mass, more preferably less than 2.0 parts by mass, and still more preferably less than 1.0 parts by mass, with respect to 100 parts by mass of the water-absorbent resin (water-absorbent resin powder). Here, the water-absorbent resin (water-absorbent resin powder) means a water-absorbent resin that does not contain the other additive.

<Inorganic fine particles>

In a case where the water-absorbent resin of the present invention contains inorganic fine particles as the other additive, examples of the inorganic fine particles include mineral products such as talc, kaolin, fuller's earth, hydrotalcite, bentonite, activated clay, barite, natural asphaltum, strontium ore, ilmenite, and perlite; aluminum compounds such as aluminum sulfate tetradeca- to octadeca- hydrate (or anhydride thereof), potassium aluminum sulfate dodecahydrate, sodium aluminum sulfate dodecahydrate, ammonium aluminum sulfate dodecahydrate, aluminum chloride, polyaluminum chloride, and aluminum oxide; other polyvalent metal salts such as calcium phosphate, polyvalent metal oxides, and polyvalent metal hydroxides; hydrophilic amorphous silicas; and oxide complexes such as a silicon oxide-aluminum oxide-magnesium oxide complex, a silicon oxide-aluminum oxide complex, and a silicon oxide-magnesium oxide complex. Two or more types of these may be used in combination. An addition amount of the inorganic fine particles is preferably less than 2.0 parts by mass, more preferably less than 1.5 parts by mass, and still more preferably less than 1.0 parts by mass, with respect to 100 parts by mass of the water-absorbent resin (water-absorbent resin powder). Here, the water-absorbent resin (water-absorbent resin powder) means a water-absorbent resin that does not contain the other additives.

[2-4] Production method

As a method for producing the water-absorbent resin of the present invention, for example, the following production method can be adopted.

[3] Second embodiment: Method for producing water-absorbent resin

A method for producing a water-absorbent resin according to an embodiment of the present invention (hereinafter referred to as "the production method of the present invention") includes a polymerization step of subjecting a monomer composition containing an acid group-containing unsaturated monomer and optionally containing a monomer other than the acid group-containing unsaturated monomer to crosslinking polymerization to obtain a crosslinked hydrogel polymer, wherein at least a part of the acid group-containing unsaturated monomer is a neutralized acid group-containing unsaturated monomer, the neutralized acid group-containing unsaturated monomer contains one or more salts selected from the group consisting of a potassium salt, a lithium salt, and an ammonium salt, a total content of the acid group-containing unsaturated monomer and the monomer other than the acid group-containing unsaturated monomer in the monomer composition is 30 mass% or more and less than 55 mass% with respect to a total mass of the monomer composition, and a polymerization initiation temperature in the polymerization step is 60°C or higher.

[3-1] Mechanism of production method of present invention

The production method of the present invention includes a polymerization step of subjecting a monomer composition containing an acid group-containing unsaturated monomer and optionally containing a monomer other than the acid group-containing unsaturated monomer to crosslinking polymerization to obtain a crosslinked hydrogel polymer, wherein at least a part of the acid group-containing unsaturated monomer is a neutralized acid group-containing unsaturated monomer, and the neutralized acid group-containing unsaturated monomer contains one or more salts selected from the group consisting of a potassium salt, a lithium salt, and an ammonium salt.

Thus, the water-absorbent resin produced by the production method of the present invention contains a crosslinked polymer, and a monomer constituting the crosslinked polymer contains an acid group neutralized by a cation of potassium ($K^+$), a cation of lithium ($Li^+$), or a cation of ammonium ($NH_4^+$).

Here, as described in the section [2-3-1], in the water-absorbent resin having an acid group neutralized with $K^+$, $Li^+$, or $NH_4^+$, $K^+$, $Li^+$, or $NH_4^+$ is more likely to be dissociated and thus the water-absorbent resin more favorably absorbs and retains water, and can more easily swell and gel particularly in a low temperature condition. Accordingly, the production method can produce a water-absorbent resin having a small value of the 0°C Vortex and a small value of the Vortex ratio (0°C/30°C) and satisfying the conditions (a) and (b).

In the production method of the present invention, the total content of the acid group-containing unsaturated monomer and the monomer other than the acid group-containing unsaturated monomer in the monomer composition is 30 mass% or more and less than 55 mass% with respect to the total mass of the monomer composition. Note that the "total content of the acid group-containing unsaturated monomer and the monomer other than the acid group-containing unsaturated monomer" here means the content (concentration) of all monomers in the monomer composition. Hereinafter, the "total content of the acid group-containing unsaturated monomer and the monomer other than the acid group-containing unsaturated monomer" is also referred to as the "content of all monomers in the monomer composition".

When the content of all monomers in the monomer composition is more than 55 mass%, the amount of water-soluble content in the obtained water-absorbent resin may increase, and the GEX value described below may not fall within a desired range.

When the content of all monomers in the monomer composition is 30 mass% or more, the production method of the present invention allows the crosslinking polymerization reaction to proceed appropriately, and can produce a water-absorbent resin having a desired amount of water-soluble content and CRC of more than 25 g/g. It is considered that with the above configuration, the water-absorbent resin contains a desired amount of water-soluble content and has CRC controlled to be more than 25 g/g.

As described above, the water-absorbent resin produced by the production method of the present invention has high CRC and a small amount of water-soluble content, and thus the GEX value is controlled to be 17 or more. Accordingly, the production method of the present invention can produce a water-absorbent resin that satisfies the conditions (c) and (d).

As described above, according to the production method of the present invention, the water-absorbent resin of the present invention can be produced.

Note that in the production method of the present invention, the polymerization initiation temperature in the polymerization step is 60°C or higher. Here, when preparing an "at least partially neutralized acid group-containing unsaturated monomer" in the monomer composition to be subjected to the polymerization step, the temperature of the monomer composition generally reaches 60°C or higher due to heat of neutralization. Thus, in general, it is not necessary to separately heat the monomer composition to control the polymerization initiation temperature to be 60°C or higher.

On the other hand, in a case where the temperature of the monomer composition does not reach 60°C, the monomer composition is separately heated to increase the temperature of the monomer composition to 60°C or higher. As the heating method at that time, a known heating method can be adopted, and there is no particular limitation. In addition, the production method of the present invention has an effect of excellent productivity because the polymerization can be performed in a short time by setting the polymerization initiation temperature to 60°C or higher.

[3-2] Each step constituting production method of present invention

The production method of the present invention includes the polymerization step, and may include, in addition to the polymerization step, general steps constituting a method for producing a water-absorbent resin. Hereinafter, each step that may constitute the production method of the present invention will be described in detail.

[3-2-1] Preparation step of monomer composition

The production method of the present invention may include a step of preparing a monomer composition containing a monomer serving as a raw material of the water-absorbent resin. The monomer composition is usually an aqueous solution containing an acid group-containing unsaturated monomer as a main component and optionally containing a monomer other than the acid group-containing unsaturated monomer. Note that the monomer composition is preferably a homogeneous aqueous solution. On the other hand, as the monomer composition, a slurry liquid of the monomer (a dispersion having a concentration exceeding the saturation concentration of the monomer) can also be used within a range where the water absorption performance of the water-absorbent resin to be obtained does not decrease.

<Acid group-containing unsaturated monomer>

As the acid group-containing unsaturated monomer, the acid group-containing unsaturated monomers listed in the section of <Acid group-containing unsaturated monomer> of [2-3-1] described above can be used, and the description in the section can be incorporated herein. However, the acid group-containing unsaturated monomer includes a neutralized acid group-containing unsaturated monomer which is one or more salts selected from the group consisting of a potassium salt, a lithium salt, and an ammonium salt among the acid group-containing unsaturated monomers listed in the above section.

<Monomer other than acid group-containing unsaturated monomer>

As the monomer other than the acid group-containing unsaturated monomer as well, the monomers other than the acid group-containing unsaturated monomer listed in the above section can be used, and the description in the section can be incorporated herein.

<Polymerization inhibitor>

The monomer composition to be subjected to the polymerization step may preferably contain a small amount of a polymerization inhibitor from the viewpoint of stability of polymerization. A preferred polymerization inhibitor is p-methoxyphenol. An amount of the polymerization inhibitor contained in the monomer (particularly, acrylic acid and a salt thereof) is usually 1 ppm or more and 250 ppm or less, preferably 10 ppm or more and 160 ppm or less, and more preferably 20 ppm or more and 80 ppm or less.

<Neutralizing agent>

As described above, at least a part of the acid group-containing unsaturated monomer in the monomer composition in the production method of the present invention is neutralized, and the neutralized acid group-containing unsaturated monomer contains one or more salts selected from the group consisting of a potassium salt, a lithium salt, and an ammonium salt. The production method of the present invention may include using a neutralizing agent to neutralize at least a part of the acid group-containing unsaturated monomer.

Here, the neutralizing agent to be used for neutralizing at least a part of the acid group-containing unsaturated monomer is not particularly limited. The neutralizing agent may be, for example, a basic substance. Examples of the neutralizing agent to be used for preparing the one or more salts selected from the group consisting of a potassium salt, a lithium salt, and an ammonium salt include basic substances such as inorganic salts such as lithium hydroxide, potassium hydroxide, and ammonium carbonate. Examples of the other neutralizing agent include inorganic salts such as sodium hydroxide and sodium carbonate, and basic substances such as an amine-based organic compound having an amino group and/or an imino group. As the neutralizing agent, two or more neutralizing agents may be used in combination.

Examples of the method for adjusting a neutralization percentage of the acid group-containing unsaturated monomer in the production method of the present invention include a method of mixing the acid group-containing unsaturated monomer and the neutralized salt thereof, a method of adding a known neutralizing agent to the acid group-containing unsaturated monomer, and a method of using a partially neutralized salt of the acid group-containing unsaturated monomer (that is, a mixture of the acid group-containing unsaturated monomer and the neutralized salt thereof) adjusted to a predetermined neutralization percentage in advance. These methods may be combined.

The neutralization percentage may be adjusted before the start of the polymerization reaction of the acid group-containing unsaturated monomer, may be adjusted during the polymerization reaction of the acid group-containing unsaturated monomer, or may be adjusted on the crosslinked hydrogel polymer obtained after the completion of the polymerization reaction of the acid group-containing unsaturated monomer. The neutralization percentage may be adjusted in any one stage selected from before the start of the polymerization reaction, during the polymerization reaction, and after the completion of the polymerization reaction, or the neutralization percentage may be adjusted in a plurality of stages. Note that in applications where the unreacted product of the neutralizing agent such as a basic substance may cause a problem, the neutralization percentage is adjusted preferably before the start of the polymerization reaction and/or during the polymerization reaction, and more preferably before the start of the polymerization reaction.

<Internal crosslinking agent>

The monomer composition in the production method of the present invention may contain an internal crosslinking agent. The internal crosslinking agent adjusts the water absorption performance and/or gel strength during water absorption of the obtained water-absorbent resin. As the internal crosslinking agent that can be used in this step, the internal crosslinking agents listed in the section of <Internal crosslinking agent> of [2-3-1] described above can be used, and the description in the section can be incorporated herein. In the method for producing a water-absorbent resin, an internal crosslinking agent is preferably used. Under polymerization conditions where self-crosslinking reaction of the monomer is effective, the internal crosslinking agent does not need to be used.

<Additional substances>

In the production method of the present invention, the following substances (hereinafter referred to as "additional substances") may be added to the monomer composition as long as the object of the present invention is achieved.

Examples of the additional substances include chain transfer agents such as thiols, thiol acids, secondary alcohols, amines, and hypophosphites; foaming agents such as carbonates, bicarbonates, azo compounds, and air bubbles; chelating agents such as ethylenediaminetetra(methylenephosphinic acid) or a metal salt thereof, ethylenediaminetetraacetic acid or a metal salt thereof, and diethylenetriaminepentaacetic acid or a metal salt thereof; and hydrophilic polymers such as polyacrylic acid (salts) and crosslinked products thereof (for example, fine powders made of a water-absorbent resin), starch, cellulose, starch-cellulose derivatives, and polyvinyl alcohol. One of the additional substances may be used alone, or two or more thereof may be used in combination.

Amounts of the additional substances used are not particularly limited. The total content (total concentration) of the additional substances in the monomer composition is preferably 10 mass% or less, more preferably 0.001 mass% or more and 5 mass% or less, and particularly preferably 0.01 mass% or more and 1 mass% or less, with respect to the total mass of the acid group-containing monomer and the monomer other than the acid group-containing monomer in the monomer composition (hereinafter referred to as the "total mass of monomers").

<Content of monomers in monomer composition>

In the present step, the content of all monomers in the monomer composition (= total mass of the acid group-containing unsaturated monomer and the monomer other than the acid group-containing unsaturated monomer/mass of the monomer composition) is 30 mass% or more and less than 55 mass%, preferably 30 mass% or more and 53 mass% or less, more preferably 35 mass% or more and 52 mass% or less, and still more preferably 40 mass% or more and 50 mass% or less, from the viewpoint of controlling the GEX value to be 17 or more and from the viewpoint of productivity.

When the content of all monomers in the monomer composition is lower, the self-crosslinking derived from entanglement of molecular chains is reduced, leading to a higher value of CRC of the obtained water-absorbent resin. From the viewpoint of making the CRC of the water-absorbent resin of the present invention more than 25 g/g, the content of all monomers in the monomer composition is less than 55 mass%, preferably 53 mass% or less, more preferably 52 mass% or less, and still more preferably 50 mass% or less.

<Polymerization initiator>

A polymerization initiator to be used in the production method of the present invention is appropriately selected in accordance with a type of polymerization and the like and is thus not particularly limited. Examples of the polymerization initiator include a thermally decomposable polymerization initiator, a photo-decomposable polymerization initiator, and combined use of these, or a redox-based polymerization initiator that uses a reducing agent in combination to accelerate the decomposition of these polymerization initiators. Specifically, one, or two or more of the polymerization initiators disclosed in US 7265190 B is/are used. Note that from the viewpoint of handleability of the polymerization initiator and physical properties of the water-absorbent resin, a peroxide or an azo compound is preferably used, a peroxide is more preferably used, and a persulfate is still more preferably used.

An amount of the polymerization initiator to be used is preferably 0.001 mol% or more and 1 mol% or less, and more preferably 0.001 mol% or more and 0.5 mol% or less with respect to the total number of moles of the acid group-containing monomer and the monomer other than the acid group-containing monomer in the monomer composition (hereinafter, referred to as the "total number of moles of the monomers"). In a case where redox polymerization is performed as necessary, an amount of the reducing agent used in combination with an oxidizing agent is preferably 0.0001 mol% or more and 0.02 mol% or less with respect to the total number of moles of the monomers.

<Dissolved oxygen amount>

Note that in a case where the monomer composition is an aqueous solution, it is also preferable to reduce dissolved oxygen in the monomer composition before polymerization by temperature rising or purging with an inert gas. For example, the dissolved oxygen is preferably reduced to 5 ppm or less, more preferably 3 ppm or less, and particularly preferably 1 ppm or less.

In the case where the monomer composition is an aqueous solution, it is also possible to disperse air bubbles (in particular, the above-mentioned inert gas or the like) in the monomer composition. In this case, the type of polymerization in the polymerization step is foaming polymerization.

[3-2-2] Polymerization step

The production method of the present invention includes a polymerization step. The polymerization step is a step of subjecting the monomer composition to crosslinking polymerization to obtain a crosslinked hydrogel polymer (hereinafter, sometimes referred to as "hydrogel"). Here, the expression "the monomer composition is subjected to crosslinking polymerization" means that the monomers contained in the monomer composition are subjected to crosslinking polymerization to obtain a crosslinked hydrogel polymer.

Note that in addition to the method of performing the polymerization reaction by adding the polymerization initiator, irradiation with an active energy ray such as a radiation ray, an electron beam, or an ultraviolet ray may be used. After the polymerization initiator is added, irradiation with an active energy ray may be used in combination.

<Type of polymerization>

Examples of the type of polymerization in the polymerization step include droplet polymerization in a gas phase, aqueous solution polymerization, and reverse phase suspension polymerization, and aqueous solution polymerization is particularly preferable. That is, the polymerization step is particularly preferably a step of polymerizing the monomer composition by aqueous solution polymerization to obtain the crosslinked hydrogel polymer. Among the aqueous solution polymerization, continuous aqueous solution polymerization is particularly preferable, and examples thereof include continuous belt polymerization or continuous kneader polymerization. Adopting the continuous aqueous solution polymerization as the type of polymerization improves the production efficiency of the water-absorbent resin. In addition, by adopting aqueous solution polymerization as the type of polymerization, it is possible to produce a water-absorbent resin substantially free of residual volatile components.

The polymerization initiation temperature is preferably 60°C or higher, more preferably 65°C or higher, still more preferably 70°C or higher, and particularly preferably 75°C or higher. Note that in a case where the monomer composition contains a solvent, the upper limit of the polymerization initiation temperature is the boiling point of the solvent.

When the polymerization initiation temperature is controlled to be within the above-mentioned preferable range, the values of the (c) and the (d) of the water-absorbent resin to be produced can be controlled to be within more preferable ranges.

<Polymerization conversion for crosslinked hydrogel polymer>

A polymerization conversion for the crosslinked hydrogel polymer obtained in the polymerization step is preferably 90 mass% or more, more preferably 95 mass% or more, still more preferably 98 mass% or more, and particularly preferably 99 mass% or more, from the viewpoint of preventing aggregation of a particulate hydrogel to be obtained in the subsequent hydrogel grinding step during drying and/or reducing the amount of residual monomers in the water-absorbent resin to be produced.

The upper limit of the polymerization conversion for the crosslinked hydrogel polymer is not particularly limited, and is ideally 100 mass%. However, a high polymerization conversion requires a long polymerization time or severe polymerization conditions, and may cause a decrease in productivity and/or physical properties. Thus, the upper limit is 99.95 mass%, and more preferably 99.9 mass%. About 99.8 mass% is usually sufficient. The polymerization conversion for the crosslinked hydrogel polymer is typically 98 to 99.99 mass%.

<Physical properties of crosslinked hydrogel polymer>

A solid fraction in the crosslinked hydrogel polymer is preferably 60 mass% or less, more preferably 57 mass% or less, and still more preferably 55 mass% or less, with respect to the total mass of the crosslinked hydrogel polymer. The solid fraction in the crosslinked hydrogel polymer is preferably 30 mass% or more, more preferably 35 mass% or more, and still more preferably 40 mass% or more, with respect to the total mass of the crosslinked hydrogel polymer. When the solid fraction is within these preferable ranges, the amount of the water-soluble content can be reduced.

[3-2-3] Hydrogel grinding step

The production method of the present invention preferably further includes a hydrogel grinding step of grinding the crosslinked hydrogel polymer to obtain a particulate hydrogel. In detail, the step is a step of grinding and micronizing the crosslinked hydrogel polymer obtained in the polymerization step simultaneously with and/or after the polymerization to obtain a particulate hydrogel. The particle size of the particulate hydrogel is adjusted to a preferable range described below so that the (surface-crosslinked) water-absorbent resin particles having an intended shape and performance can be obtained in a high yield. Note that to obtain a particulate hydrogel having a predetermined particle size, the present step may be performed twice or more.

In addition, in a case where a particulate hydrogel having an intended particle size is obtained in the polymerization step as in the reverse phase suspension polymerization or the gas phase polymerization, the present step does not need to be performed. As necessary, after the polymerization step and before the gel grinding step, a shredding step of cutting or roughly crushing the crosslinked hydrogel polymer using a roller cutter, a guillotine cutter, or the like into a size that can be put into a gel grinder may be performed. In particular, when the polymerization step is belt polymerization, and a sheet-shaped or block-shaped crosslinked hydrogel polymer is obtained, it is preferable to perform the shredding step.

<Gel grinder>

In the production method of the present invention, the type of the gel grinder is not particularly limited as long as a particulate hydrogel having a predetermined particle size is obtained without impairing the water absorption performance. Examples of the gel grinder include gel grinders equipped with a plurality of rotary stirring blades, such as a batch or continuous double-arm kneader, screw extruders such as a single-screw extruder, a twin-screw extruder, and a meat chopper, multi-screw kneaders having two or more screws, and gel grinders such as a cutter mill. Note that when the polymerization step is kneader polymerization, the polymerization step and the hydrogel grinding step are carried out simultaneously.

In one embodiment, in the hydrogel grinding step, a meat chopper or a multi-screw kneader having two or more screws is preferably used. In particular, in a case where the hydrogel is obtained by aqueous solution polymerization, fine particles can be formed by using a meat chopper or a multi-screw kneader having two or more screws in the hydrogel grinding step. Note that as for hydrogel grinding conditions and configurations, the contents disclosed in WO 2011/126079 A are preferably applied to the present invention.

<Gel fluidizer>

In the production method of the present invention, a gel fluidizer may be added before and/or during the hydrogel grinding step. This provides a particulate hydrogel containing the gel fluidizer. The addition of the gel fluidizer prevents the hydrogel particles from adhering or bonding to each other in the drying step described below, which provides an effect of improving the water absorption performance of the obtained water-absorbent resin. In addition, a load in a pulverizing step after drying to be described below is reduced, which provides an effect of reducing an amount of fine powder generated. Furthermore, in a case where stirring drying is performed in the drying step, the particle size of the obtained particulate dried polymer approaches the particle size of the product, and thus, the above effect becomes remarkable. From the viewpoint of uniformly incorporating the gel fluidizer into each particle of the obtained particulate hydrogel, the gel fluidizer is preferably added during the hydrogel grinding step. Note that even in a case where the hydrogel grinding step is not required, such as in a case where reverse phase suspension polymerization is performed in the polymerization step, it is preferable to add the gel fluidizer to the particulate hydrogel at least before the drying step.

The amount of the gel fluidizer to be added is appropriately set depending on the moisture content of the hydrogel or the particulate hydrogel and/or the type of the gel fluidizer. The addition amount is preferably 0.001 mass% to 0.5 mass%, more preferably 0.01 mass% to 0.3 mass%, and still more preferably 0.02 mass% to 0.2 mass% with respect to the solid content of the hydrogel.

Examples of the gel fluidizer include anionic, cationic, nonionic, and amphoteric surfactants, and low-molecular-weight or high-molecular-weight surfactants thereof, and polymer lubricants.

Surfactant

Specific examples of the surfactant to be used in the gel fluidizer include (1) nonionic surfactants such as sucrose fatty acid esters, polyglycerin fatty acid esters, sorbitan fatty acid esters, polyoxyethylene sorbitan fatty acid esters, polyoxyethylene glycerin fatty acid esters, sorbitol fatty acid esters, polyoxyethylene sorbitol fatty acid esters, polyoxyethylene alkyl ethers, polyoxyethylene alkylphenyl ethers, polyoxyethylene castor oil, polyoxyethylene hydrogenated castor oil, alkylarylformaldehyde-condensed polyoxyethylene ethers, polyoxyethylene polyoxypropylene block copolymers, polyoxyethylene polyoxypropyl alkyl ethers, polyethylene glycol fatty acid esters, alkyl glucosides, N-alkylglucosamides, polyoxyethylene fatty acid amides, polyoxyethylene alkylamines, phosphates of polyoxyethylene alkyl ethers, and phosphates of polyoxyethylene alkylallyl ethers, (2) amphoteric surfactants such as alkyl dimethylaminoacetic acid betaines such as capryl dimethylaminoacetic acid betaine, lauryl dimethylaminoacetic acid betaine, myristyl dimethylaminoacetic acid betaine, and stearyl dimethylaminoacetic acid betaine, alkylamidopropylbetaines such as lauric acid amidopropylbetaine, coconut oil fatty acid amidopropylbetaine, and palm kernel oil fatty acid amidopropylbetaine, alkylhydroxysulfobetaines such as laurylhydroxysulfobetaine, and alkylcarboxymethylhydroxyethylimidazolinium betaines such as 2-alkyl-N-carboxymethyl-N-hydroxyethylimidazolinium betaine, (3) anionic surfactants such as monoalkali metal alkylaminodiacetic acid such as monosodium laurylaminodiacetate, potassium laurylaminodiacetate, and sodium myristylaminodiacetate, and (4) cationic surfactants such as long-chain alkyldimethylaminoethyl quaternary salts. Two or more types of these may be used in combination.

<Polymer lubricant>

In the production method of the present invention, a polymer lubricant exemplified below can be added to the monomer composition and/or the hydrogel within a range in which the object of the present invention is achieved.

Specific examples of the polymer lubricant include maleic anhydride-modified polyethylene, maleic anhydride-modified polypropylene, maleic anhydride-modified ethylene-propylene copolymer, maleic anhydride-modified ethylene-propylene-diene terpolymer (EPDM), maleic anhydride-modified polybutadiene, maleic anhydride-ethylene copolymer, maleic anhydride-propylene copolymer, maleic anhydride-ethylene-propylene copolymer, maleic anhydride-butadiene copolymer, polyethylene, polypropylene, ethylene-propylene copolymer, oxidized polyethylene, oxidized polypropylene, oxidized ethylene-propylene copolymer, ethylene-acrylic acid copolymer, ethyl cellulose, ethylhydroxyethyl cellulose, and polyalkylene oxide such as polyethylene glycol. The molecular weight (weight-average molecular weight) of these is appropriately selected in a range of preferably 200 to 2000000, and more preferably 400 to 1000000. Two or more types of these may be used in combination.

As the gel fluidizer, these polymer lubricants and the above-mentioned surfactants may be used in combination. In a case where a surfactant and a polymer lubricant are used in combination, the total addition amount of the surfactant and the polymer lubricant is appropriately set depending on the type of polymerization, the composition of the monomer composition, and the moisture content of the hydrogel. In a case where the gel fluidizer is added to the monomer composition, the addition amount is set as a concentration with respect to the monomer component, in a case where the gel fluidizer is added to the hydrogel the addition amount is set with respect to the solid fraction, and in a case where the gel fluidizer is added to both, the addition amount is set as the total of the above. These gel fluidizers may be the same as a dispersing aid to be used when performing the reverse phase suspension polymerization.

The total addition amount of the surfactant and the polymer lubricant is preferably 1.0 mass% or less, and more preferably 0.5 mass% or less, and is preferably 0.05 mass% or more, and particularly preferably 0.1 mass% or more.

<Hydrogen peroxide>

In the production method of the present invention, hydrogen peroxide may be added in a step before the drying step. When hydrogen peroxide is added in the step before the drying step and heating is performed in the drying step or the subsequent steps, the crosslinked structure in the water-absorbent resin is cut by hydrogen peroxide when heat is applied after the drying step, the centrifuge retention capacity (CRC) can be efficiently increased, whereby a water-absorbent resin having CRC exceeding 25 g/g can be obtained. More specifically, it is preferable to add hydrogen peroxide to the monomer composition before the polymerization step and/or to add hydrogen peroxide to the hydrogel during the gel grinding step.

The addition amount of hydrogen peroxide to the monomer composition and/or the hydrogel is appropriately set in consideration of selected polymerization conditions and an amount (ppm) of hydrogen peroxide remaining before drying. For example, in consideration of improvement of the physical properties, particularly the centrifuge retention capacity (CRC), of the obtained water-absorbent resin, the total amount of hydrogen peroxide is preferably 50 ppm (0.005 mass%) or more, more preferably 50 ppm (0.005 mass%) to 10000 ppm (1.0 mass%), and still more preferably 100 ppm (0.01 mass%) to 5000 ppm (0.5 mass%), with respect to the mass (%) of the solid content of the monomer composition or the crosslinked hydrogel polymer.

The method of adding hydrogen peroxide is not particularly limited. The addition method is preferably an addition of an aqueous solution in which hydrogen peroxide is dissolved, because the addition is easy. The concentration of the aqueous solution is not particularly limited, and is usually about from 1 to 40 mass%. The hydrogen peroxide aqueous solution may contain a small amount of a hydrophilic solvent such as methyl alcohol, ethyl alcohol, n-propyl alcohol, or isopropyl alcohol.

In addition, in the case of adding hydrogen peroxide, the crosslinked hydrogel polymer and/or the dried polymer is preferably heated in such a manner that the highest temperature reached thereof exceeds 160°C in the drying step or the subsequent steps. With such heating, the crosslinked structure in the water-absorbent resin is cut by hydrogen peroxide, whereby a particulate water-absorbent agent having a high centrifuge retention capacity (CRC) can be obtained. The highest temperature reached is, in the more preferable order, higher than 160°C and 250°C or lower, 170°C or higher and 220°C or lower, or 180°C or higher and 200°C or lower. For the addition method of hydrogen peroxide and the heating after the drying step, conditions described in WO 22/163849 may be adopted.

<Solid fraction of hydrogel>

The solid fraction of the hydrogel to be subjected to the hydrogel grinding step (hereinafter, referred to as gel solid fraction) is preferably 25 mass% or more. From the viewpoint of prevention of aggregation of the hydrogel particles after hydrogel grinding, energy required for grinding, drying efficiency, and absorption performance, the gel solid fraction is more preferably from 25 mass% to 75 mass%, still more preferably from 30 mass% to 70 mass%, still even more preferably from 35 mass% to 65 mass%, and particularly preferably from 40 mass% to 60 mass%.

<Moisture content of particulate hydrogel>

The moisture content of the particulate hydrogel(hereinafter, gel moisture content is determined by a measurement method described in Examples below. From the viewpoint of the fluidity of the particulate hydrogel in the drying step described below, the gel moisture content is preferably 25 mass% or more, more preferably 30 mass% or more, still more preferably 35 mass% or more, particularly preferably 40 mass% or more, and extremely preferably 43 mass% or more. Excessive high-concentration polymerization may deteriorate the physical properties of the water-absorbent resin, and from the viewpoint of drying efficiency and absorption performance, the gel moisture content is preferably 75 mass% or less, more preferably 60 mass% or less, and particularly preferably 55 mass% or less.

<Particle size of particulate hydrogel>

From the viewpoint of controlling the particle size of the obtained water-absorbent resin, the mass-average particle size of the particulate hydrogel (particulate hydrogel before drying) obtained through the hydrogel grinding step is preferably 1 mm or less in terms of solid content. The mass-average particle size in terms of solid content is preferably from 10 $\mu$m to 1000 $\mu$m, more preferably from 20 $\mu$m to 800 $\mu$m, still more preferably from 40 $\mu$m to 500 $\mu$m, particularly preferably from 50 $\mu$m to 300 $\mu$m, and most preferably from 60 $\mu$m to 200 $\mu$m. The mass-average particle size (Solid D50) of the particulate hydrogel in terms of solid content can be measured by a method described in Examples.
Note that the phrase "in terms of solid content" means physical properties obtained by measuring various physical properties such as the particle size of the crosslinked hydrogel polymer and then converting the physical properties into physical properties per solid content of the water-absorbent resin in the crosslinked hydrogel polymer. For example, in a case of a crosslinked hydrogel polymer having a moisture content of 50% (solid content of 50%), the conversion is performed by multiplying the measured physical property value of the crosslinked hydrogel polymer by 2.

(Gel grinding with meat chopper)

In one embodiment, in the hydrogel grinding step, it is preferable to perform gel grinding using a meat chopper (screw extruder) illustrated in FIG. 1 of WO 2013/002387. The meat chopper is provided with a die (also referred to as a "die plate" or a "perforated plate") at an extrusion port. A device size of the meat chopper is appropriately set depending on a desired production amount. A thickness of the perforated plate, a pore size of the perforated plate, an opening ratio of the perforated plate, a rotation speed of a screw shaft, a charging rate of the crosslinked hydrogel polymer, and the like are appropriately set depending on the device size, and are not particularly limited.
In the grinding with the meat chopper, the hydrogel is preferably caused to pass through the meat chopper preferably twice or more, and more preferably three times or more. In the present invention, (GGE(1)) for subjecting the hydrogel to gel grinding is preferably from 10 to 500 J/g, more preferably from 15 to 400 J/g, still more preferably from 20 to 300 J/g, still even more preferably from 45 to 250 J/g, and particularly preferably from 25 to 200 J/g.
When the gel grinding energy (GGE(1)) is less than 10 J/g, the crosslinked hydrogel polymer may not be ground into a particulate hydrogel having a desired particle size. On the other hand, when the gel grinding energy (GGE(1)) is more than 500 J/g, the load on the grinder becomes large, and the grinder may be broken in continuous operation. In this case, excessive shearing and compression forces are applied to the crosslinked hydrogel polymer, which may cause deterioration of physical properties such as an increase in amount of water-soluble content generated.
The gel grinding energy (GGE(2)) is preferably from 5 to 300 J/g, more preferably from 6 to 280 J/g, from 8 to 260 J/g, from 9 to 250 J/g, or from 10 to 240 J/g.
When the gel grinding energy (GGE (2)) is less than 5 J/g, the crosslinked hydrogel polymer may not be ground into a particulate hydrogel having a desired particle size. On the other hand, when the gel grinding energy (GGE(2)) is more than 300 J/g, excessive shearing and compression forces are applied to the crosslinked hydrogel polymer, which may cause deterioration of physical properties such as an increase in amount of water-soluble content generated.
Note that in a case where the grinding is performed a plurality of times, the gel grinding energy ((GGE(1)) or (GGE(2))) of the entire grinding of the plurality of times can be calculated by adding the gel grinding energy (GGE (1)) or (GGE (2)) at each time of grinding.

The gel grinding energy is GGE(1) or GGE(2) described in WO 2016/204302, and means mechanical energy per unit weight (unit weight of the crosslinked hydrogel polymer) required by a gel grinder when the crosslinked hydrogel polymer is subjected to gel grinding. The gel grinding energy (GGE(1)) is defined by including an energy during idling of the gel grinder, and the gel grinding energy (GGE(2)) is defined by subtracting the energy during idling of the gel grinder. In the case where the gel grinding is performed a plurality of times, the entire gel grinding energy of the plurality of times of grinding is calculated by summing the gel grinding energy given by each time of grinding.

As the gel grinding using a meat chopper (screw extruder), the conditions described in WO 2016/204302 can be applied to the present invention.

(Gel grinding by multi-screw kneader with two or more screws)

In one embodiment, in the hydrogel grinding step, it is preferable to perform gel grinding using a multi-screw kneader illustrated in FIGS. 1 and 2 of WO 2022/065365. As illustrated in FIGS. 1 and 2 described above, in the hydrogel grinding step after the polymerization step, a gel grinder having an inlet, a main body incorporating a plurality of rotating shafts, and an outlet is used. Each rotating shaft has a grinding means. In this gel grinder, a crosslinked hydrogel polymer continuously charged into the main body from the inlet is ground by the grinding means of each rotating shaft, and continuously taken out from the outlet as a particulate crosslinked hydrogel polymer. That is, the crosslinked hydrogel polymer charged into the main body from the inlet is ground by the grinding means of each rotating shaft while moving from the inlet to the outlet. Note that in the present invention, the main body means a body portion in which a plurality of rotating shafts and grinding means are installed, and is also referred to as a barrel, a trough, a casing, or the like. Preferably, the crosslinked hydrogel polymer charged into the main body through the inlet is ground by the grinding means of each rotating shaft in the multi-screw kneader while moving from the inlet to the outlet and maintaining the temperature of the crosslinked hydrogel polymer at 50°C or higher.

The multi-screw kneader may be of a vertical type (the traveling direction of the hydrogel is the vertical direction), or may be of a lateral type or a horizontal type (the traveling direction of the hydrogel is the left-right direction or the horizontal direction), as long as it is of a continuous type. In addition, in the vertical and horizontal gel grinders, there may be provided an inclination of 0° to 90° with respect to the horizontal direction. For example, in the case of the horizontal continuous grinder illustrated in FIG. 1 of WO 2022/065365, an inclination is appropriately provided as necessary, and the inclination may be downward or upward from the inlet toward the outlet (that is, with respect to the traveling direction of the hydrogel). Usually, an angle of the inclination is from 0° to 10°, preferably from 0° to 1°, and particularly preferably 0°.

From the viewpoint of continuously and stably performing gel grinding, the multi-screw kneader preferably has a heating means and/or a heat retaining means. The heating means and/or heat retaining means is not particularly limited, but from the viewpoint of preventing adhesion and aggregation of the hydrogel and the particulate hydrogel, heating means of direct heat transfer using convection heat transfer and/or indirect heat transfer by heat conduction from a heating surface (contact surface with hydrogel, heat source portion) of the gel grinder heated with a heat medium is preferable. A more preferable heating means is a ventilation heating type for direct heat transfer and an outer wall heating type for indirect heat transfer.

From the viewpoint of continuously and stably performing gel grinding, the multi-screw kneader preferably includes a heating means and/or a heat retaining means, and more preferably a heating means, on the outer surface of the main body. Examples of the heat retaining means include a method of covering a part or the whole of the outer surface of the main body (preferably 50% or more, more preferably 80% or more, and particularly preferably the whole of the outer surface of the main body) with a heat insulating material. Examples of the heating means include an electric tress, a steam tress, and a jacket heated with a heat medium. When the multi-screw kneader includes the heating means and/or the heat retaining means, the gel grinding step can be performed in a more preferable temperature range. In addition, it is possible to avoid deterioration of the quality of gel grinding due to the influence of temperature differences such as seasons and day and night. Furthermore, it is possible to smoothly guide the gel grinder to a stable operation even at the time of start-up of the gel grinder.

The type of the grinding means of each rotating shaft is not particularly limited as long as the effect of the present invention is obtained. Examples of a member having a shearing action on the hydrogel include disks having various shapes. A disk may be referred to as a chip, a paddle, an element, kneading, a rotor, or the like. The shape of the disk is not particularly limited, and is appropriately selected from a disk shape, an elliptical shape, a substantially triangular shape, and the like. Disks having different shapes can be used in combination, and the arrangement thereof is appropriately adjusted from the viewpoint of the intended particle size of the particulate hydrogel and the energy required for grinding. As the grinding means, an arm, a vane, a blade, a cut disk (CD), or the like may be used in combination.

The distance (clearance) between the disk and the main body (barrel) may vary from location to location. When the shortest distance between the outer periphery of the disk and the inner wall of the main body (barrel) is defined as a minimum clearance C, the minimum clearance C is preferably 20% or less, more preferably 15% or less, still more preferably 10% or less, and particularly preferably 5% or less, with respect to a maximum diameter D of the disk. Note that "D" is an abbreviation of Diameter, and means the diameter of the largest disk in a case where a plurality of disks having different diameters are used. When the minimum clearance C is the upper limit value or less, the shearing force between the barrel and the disk during gel grinding becomes strong, and the gel grinding efficiency becomes favorable. The minimum clearance C is preferably 0.2% or more, more preferably 0.5% or more, and still more preferably 1% or more, with respect to the maximum diameter D of the disk. When the minimum clearance C is the lower limit value or more, contact between the disk and the inner wall of the main body (barrel) is prevented, which prevents mixing of a metal foreign substance due to abrasion. In a preferable form of the present invention, the minimum clearance C is from 0.2 to 20% with respect to the maximum diameter D of the disk.

The rotation speed of the plurality of rotating shafts of the multi-screw kneader may be constant or not constant, and is appropriately set depending on the device, but is preferably in a range of 1 rpm to 1000 rpm, more preferably 3 rpm to 500 rpm, and still more preferably 5 rpm to 300 rpm. In addition, in a case where the rotation speeds of the respective rotating shafts are different from each other, a ratio of the rotation speed of one rotating shaft to the rotation speed of another rotating shaft is usually in a range of 1 to 10, and preferably in a range of 1 to 2.

The rotation directions of the plurality of rotating shafts may be of a same direction type in which the respective rotating shafts rotate in the same direction, or may be of a different direction type in which the respective rotating shafts rotate in opposite directions. In the same direction type device, a self-cleaning property can be expected, and in the different direction type device, a strong shearing force can be expected. The rotation direction of each rotating shaft is appropriately selected in combination with the arrangement (disk pattern) of the grinding means described above.

The multi-screw kneader preferably has a function of supplying water and/or water vapor into the main body. Thus, according to an embodiment of the present invention, in the gel grinding step, water and/or water vapor is supplied into the main body. As a means for supplying water and/or water vapor, the gel grinder may be provided with a plurality of inlets. The setting positions of the inlets for water and/or water vapor are not limited, but the inlets are preferably provided on the side of the inlet for the hydrogel. Water and water vapor may be supplied from different inlets.

In the addition of water vapor, a gas may be mixed with water vapor to be added as a mixed gas. The gas is not particularly limited, and may be, for example, air, dry air, nitrogen, or the like. The pressure of water vapor to be added is not particularly limited, and is preferably from 0.2 to 0.8 MPa. The temperature of water and/or water vapor (including a mixed gas) is not particularly limited, and is preferably 50°C or higher, more preferably 60°C or higher, still more preferably 70°C or higher, and particularly preferably 80°C or higher. From the viewpoint of preventing excessive temperature rise and drying of the hydrogel, the temperature of water and/or water vapor (including a mixed gas) is preferably 200°C or lower, more preferably 170°C or lower, still more preferably 150°C or lower, still even more preferably 120°C or lower, and particularly preferably 100°C or lower. In a preferred configuration, the temperature of the water and/or water vapor supplied into the main body is from 50 to 120°C. The temperature of the hydrogel and the particulate hydrogel in the multi-screw kneader can be adjusted by the temperature and the charged amount of water and/or water vapor (including the mixed gas) to be used. In this case, the water vapor and/or the mixed gas acts as a heat medium for direct heat transfer, and the hydrogel and the particulate hydrogel inside the main body are heated to or kept at a predetermined temperature. Note that an additive such as a gel fluidizer, a crosslinking agent, an oxidizing agent, a reducing agent, or a polymerization initiator, which will be described below, may be blended with water and/or the water vapor (including the mixed gas) to be added.

The amount of water and/or water vapor supplied is preferably from 0.1 mass% to 50 mass%, more preferably from 0.5 mass% to 40 mass%, and still more preferably from 1 mass% to 30 mass%, with respect to the mass of the hydrogel in terms of solid content.

More preferably, before the hydrogel is charged into the multi-screw kneader, a temperature of the inside (inner surface) of the main body is elevated to 50°C or higher, more preferably 60°C or higher, still more preferably 70°C or higher, and still even more preferably 80°C or higher. This reduces adhesion of the hydrogel to the inner surface of the main body, and further improves the water absorption performance of the obtained water-absorbent resin. That is, in the gel grinding by the multi-screw kneader, it is preferable that the inner surface of the main body is heated to the above-described temperature or higher before charging the hydrogel and at the start of the gel grinding. From the viewpoint of maintaining the temperature in the gel grinding step at 50°C or higher, the temperature of the inside (inner surface) of the main body is preferably maintained in the above range in the gel grinding step.

The temperature at which the crosslinked hydrogel polymer is continuously ground is preferably 50°C or higher, more preferably 60°C or higher, still more preferably 70°C or higher, and still even more preferably 80°C or higher.

The upper limit of the temperature at which the crosslinked hydrogel polymer is continuously ground is not particularly limited, but is preferably 200°C or lower, more preferably 170°C or lower, still more preferably 150°C or lower, still even more preferably 130°C or lower, and particularly preferably 110°C or lower, from the viewpoint of preventing excessive temperature rise and drying of the hydrogel.

FIGS. 1 and 2 of WO 2022/065365 illustrate an example of a multi-screw kneader (gel grinder) that is suitably used in the present invention. FIG. 1 is a partially cutaway side view of the gel grinder, and FIG. 2 is an enlarged view of the gel grinder (a view of a central portion of the main body as viewed from above). The basic configuration and the method of use of the gel grinder are the same as those of the gel grinder illustrated in FIGS. 1 and 2.

The rotating shaft of the gel grinder has a plurality of disks. The shapes of the plurality of disks may be the same or different from each other, but are preferably different from each other. The combination of the disks is appropriately changed depending on the physical properties of the hydrogel, the size of the ground gel to be obtained, and the like with reference to, for example, a patent document (JP 2005-35212 A) or the like.

Examples of the gel grinder (multi-screw kneader) having such a basic configuration include a multi-screw kneader having two or more screws. Specific examples thereof include a kneader having two screws, three screws, four screws, or eight screws. As the gel grinder, a continuous type is suitably used from the viewpoint of production efficiency. Specific examples of the gel grinder include a CKH-type continuous kneader (Honda Machinery Works Co., Ltd.), a twin-screw extruder TEX (The Japan Steel Works, Ltd.), a twin-screw extruder TEX$\alpha$III (The Japan Steel Works, Ltd.), a continuous kneader (DALTON Corporation), a KRC hybrid reactor (Kurimoto, Ltd.), a Kurimoto Readco Continuous (KRC) kneader (Kurimoto, Ltd.), a KEX extruder (Kurimoto, Ltd.), a KEXD extruder (Kurimoto, Ltd.), a double-arm kneader-ruder (Moriyama Company Ltd.), a twin-screw kneading extruder TEX-SSG (Toshiba Machine Co., Ltd.), a twin-screw kneading extruder TEX-CS (Toshiba Machine Co., Ltd.), a twin-screw kneading extruder TEX-SX (Toshiba Machine Co., Ltd.), a twin-screw kneading extruder TEX-DS (Toshiba Machine Co., Ltd.), a twin-screw kneading extruder TEX-A (Toshiba Machine Co., Ltd.), a twin-screw kneading extruder TEX-B (Toshiba Machine Co., Ltd.), a twin-screw kneading extruder TEX-BS (Toshiba Machine Co., Ltd.), and quad- or octa-screw kneading extruders WDR series (TECHNOVEL CORPORATION). Thus, in a preferred embodiment of the present invention, the gel grinder is a continuous multi-screw kneader.

In the grinding by the multi-screw kneader, the upper limit value of the gel grinding energy (GGE(2)) for subjecting the hydrogel to gel grinding is preferably 150 [J/g] or less, more preferably 130 [J/g] or less, and still more preferably 120 [J/g] or less. The lower limit value is preferably 20 [J/g] or more, more preferably 40 [J/g] or more, and still more preferably 50 [J/g] or more. For example, in the present invention, the gel grinding energy (GGE(1)) for subjecting the hydrogel to gel grinding is from 20 to 150 [J/g], preferably from 40 to 130 [J/g], and more preferably from 50 to 120 [J/g]. The GGE(2) is from 20 to 150 [J/g], preferably from 40 to 130 [J/g], and more preferably from 50 to 120 [J/g]. By controlling the GGE(1) and CGE(2) within the range described above, gel grinding can be performed while applying appropriate shear and compressive forces to the hydrogel. The method for calculating GGE(1) and GGE(2) is the same as the method for calculating the gel grinding energy described in the gel grinding with the meat chopper.

(Gel temperature)

In the gel grinding using the multi-screw kneader, from the viewpoint of continuously grinding the crosslinked hydrogel polymer, in the gel grinding step, a temperature T1 of the crosslinked hydrogel polymer to be charged into the inlet of the gel grinder is preferably 50°C or higher. Hereinafter, the temperature T1 is also referred to as the "gel temperature T1 at the inlet" or simply the "gel temperature T1". The gel temperature T1 is preferably measured by a thermometer installed at the inlet. From the viewpoint of preventing the gel-ground hydrogel from adhering to the grinder, the gel temperature T1 is preferably 60°C or higher, and from the viewpoint of further improving the water absorption performance of the water-absorbent resin particles, the gel temperature T1 is more preferably 70°C or higher, and still more preferably 80°C or higher. From the viewpoint of preventing excessive drying, the gel temperature T1 is preferably 130°C or lower, more preferably 110°C or lower, still more preferably 100°C or lower, and particularly preferably 90°C or lower. For the same reason, the gel temperature during grinding is preferably 130°C or lower. Note that as for the crosslinked hydrogel polymer to be charged into the gel grinder, a raised temperature of the crosslinked hydrogel polymer due to polymerization heat is kept, or the obtained crosslinked hydrogel polymer is heated, whereby the gel temperature T1 can be adjusted to fall within a desired range.

From the viewpoint of preventing aggregation of the hydrogel subjected to gel grinding, a temperature T2 of the particulate crosslinked hydrogel polymer discharged from the gel grinder is preferably from 60°C to 140°C, more preferably from 70°C to 130°C, still more preferably from 80°C to 120°C, particularly preferably from 80°C to 115°C, and most preferably from 100°C to 115°C. Hereinafter, the temperature T2 is also referred to as the "gel temperature T2 at the outlet" or simply as the "gel temperature T2". Preferably, it is set in such a manner that the temperature T2 is in the temperature range, and the temperature T1 is in the temperature range described above. The gel temperature T2 is preferably measured by a thermometer installed at the outlet. Note that the setting temperature of the heating means and/or the heat retaining means of the gel grinder and the residence time of the crosslinked hydrogel polymer in the gel grinder are appropriately adjusted, whereby gel temperature T2 can be adjusted to fall within a desired range.

In the gel grinding by the multi-screw kneader, the gel fluidizer described above is preferably added. The gel fluidizer may be added once or may be added a plurality of times by dividing the gel fluidizer into two or more portions, and the position of addition may be any position of the kneader. In a case where the gel fluidizer is added in a plurality of divided portions, it is preferable to add the gel fluidizer at different positions.

[3-2-4] Drying step

The production method of the present invention may include a drying step. The drying step is a step of drying the particulate hydrogel (preferably containing the gel fluidizer) to a desired moisture content to obtain a dried polymer, preferably a particulate dried polymer. Note that the particulate hydrogel to be subjected to the drying step is not limited to one obtained through the gel grinding step, and may be obtained by, for example, reverse phase suspension polymerization. The (particulate) dried polymer obtained in the drying step may include a granulated product (hereinafter, a dried granulated product) formed by physical or chemical adhesion of a plurality of particles.

<Temperature of particulate hydrogel >

From the viewpoint of preventing formation of large particles due to adhesion between the particulate hydrogel and the fine powder granulated product, the temperature T2 of the particulate hydrogel to be subjected to the drying step is controlled to be preferably 50°C or higher, more preferably 60°C or higher, still more preferably 70°C or higher, particularly preferably 80°C or higher, and most preferably 90°C or higher. In addition, from the viewpoint of preventing an object to be dried from being colored and/or from deteriorating in performances, the temperature T2 is preferably 130°C or lower, more preferably 110°C or lower, and still more preferably 105°C or lower. Typically, the temperature T2 is measured by a contact thermometer at a central portion (for example, a position around 5 cm in a case where the thickness of the material is 10 cm) of a material layer (the particulate hydrogel and/or the dried product).

The drying method in the drying step is not particularly limited, and static drying, stirring drying, fluidized bed drying, or the like is appropriately used. Various drying methods such as thermal drying, hot air drying, drying under reduced pressure, infrared drying, microwave drying, drum dryer drying, drying by azeotropic dehydration with a hydrophobic organic solvent, and high humidity drying by use of high temperature water vapor can be adopted. From the viewpoint of drying efficiency, thermal drying or hot air drying is preferable, and stirring type thermal drying and/or fluidized bed drying in which an object to be dried is dried while being moved is more preferable.

<Dryer>

A dryer to be used in the drying step is not particularly limited, and one or two or more of a heat transfer dryer, a radiation heat transfer dryer, a hot air heat transfer dryer, a dielectric heating dryer, and the like are appropriately selected. The dryer may be of a batch type or a continuous type. The dryer may be of a direct heating type or an indirect heating type. Examples of the dryer include heat transfer dryers of a ventilation band type, a ventilation circuit type, a ventilation vertical type, a parallel flow band type, a ventilation tunnel type, a ventilation stirring type, a ventilation rotation type, a fluidized bed type, and an air flow type.

In a case of a band type or the like in which drying is performed in a stationary state, a large lump-shaped or block-shaped dried product is obtained, and thus, a large amount of fine powder may be generated when the dried product is pulverized and processed into a product particle size in a particulate shape (for example, 850 $\mu$m or more and 150 $\mu$m or less). On the other hand, a stirring dryer including a fluidizing means for fluidizing an object to be dried in the dryer (for example, a stirring blade provided in the dryer and/or rotation of the dryer itself) and one or two or more heating means is preferably used because a particulate dried product (hereinafter, sometimes referred to as a particulate dried polymer) is obtained, and a continuous stirring dryer is more preferable.

The heating means in the drying step is not particularly limited. As the heating means, from the viewpoint of drying efficiency and reduction of thermal damage to the water-absorbent resin, a heating means by direct heat transfer by convection heat transfer and/or indirect heat transfer by heat conduction from a heating surface (contact surface with an object to be dried) of the dryer heated by a heating medium is preferable. More preferable heating means in the drying step is of a ventilation heating type for direct heat transfer, and of an outer wall heating type and a tubular heating type for indirect heat transfer.

The stirring method and form are not particularly limited, and may be any form as long as the particulate hydrogel and the fine powder granulated product in the dryer are fluidized by a stirring means such as a stirring blade or a rotating cylinder. In the present specification, a dryer in which a cylindrical container for storing an object to be dried is rotated to perform stirring, that is, a dryer in which stirring means is a rotating cylinder is referred to as a rotation-type dryer. In the production method according to the present invention, examples of the rotation-type dryer include a rotary dryer, a rotary kiln, and a tube dryer, and examples of the continuous stirring dryer not classified as the rotation-type dryer include a single-screw or twin-screw disk dryer and a single-screw or twin-screw paddle dryer. As specific examples of the dryer that can be used, examples of the continuous stirring dryer other than the rotation-type dryer include Solid Air (available from Hosokawa Micron Corporation), CD Dryer (available from Kurimoto, Ltd.), and Paddle Dryer (available from Nara Machinery Co., Ltd.), and examples of the rotation-type dryer include Steam Tube Dryer (available from Kurimoto, Ltd.), Steam Tube Dryer (available from Ube Industries, Ltd.), Steam Tube Dryer (available from Tsukishima Kikai Co.,

Ltd.), Steam Tube Dryer (available from Mitsui Engineering & Shipbuilding Co., Ltd.), Rotary Kiln (available from Kurimoto, Ltd.), and Rotary Dryer (available from OKAWARA MFG. CO., LTD.).

From the viewpoint of reducing mechanical damage to the object to be dried, a preferred dryer is a rotation-type dryer (a dryer using a rotary container (further a cylindrical container, particularly a horizontal cylindrical container such as a rotary drum) that accommodates the object to be dried and rotates). From the viewpoint of reducing thermal and mechanical damage, a rotation-type dryer having one or two or more heating means selected from a ventilation heating type in the case of direct heat transfer and an outer wall heating type and a tubular heating type in the case of indirect heat transfer is more preferable. In addition, among the rotation-type dryers, in a case where heating is performed only by a ventilation heating type such as a rotary kiln, for example, problems such as scattering of dried products due to ventilation and generation of a large amount of waste gas may occur. Accordingly, as the rotation-type dryer, one or two or more heating means selected from an outer wall heating type and a tubular heating type are preferable for indirect heat transfer. Further, the tubular heating type is more preferable because a heat transfer area inside the dryer can be increased by using a plurality of heating tubes, which allows efficient drying. Examples of such a rotation-type dryer include a rotation-type dryer with a heating tube.

For example, the rotation-type dryer with a heating tube includes a rotary container (particularly, a cylindrical container, and further a horizontal cylindrical container) that accommodates an object to be dried therein and rotates, and a plurality of heating tubes that are located inside the rotary container, extend in an axial direction thereof, and rotate together with the rotary container. In this rotation-type dryer, the object to be dried flows in the container mainly by the rotation of the rotary container and the action of the plurality of heating tubes rotating together with the rotary container, and thus, mechanical and thermal damage is small. This prevents generation of fine powder and deterioration of physical properties in the drying step. Further, drying is performed by indirect heat transfer from the heating tube in this dryer, and thus, there are advantages that there is no scattering as in hot air drying (for example, a ventilation band type dryer and a ventilation heating type rotary kiln), and that a large amount of waste gas treatment is not required. In addition, in this dryer, the heat transfer area inside the dryer can be increased by increasing the number of heating tubes. The large heat transfer area enables drying in a short time and shortens the residence time in the device, thereby further reducing thermal damage.

Preferably, the rotation-type dryer includes a heating means or a heat retaining means on the outer peripheral surface of the rotary container. In this dryer, the mixture of the particulate hydrogel and the fine powder granulated product contained in the rotary container is heated by the rotation of the rotary container through contact with the plurality of heating tubes or heat conduction from the heating tubes. The inner surface of the rotary container is also heated by radiant heat of the plurality of heating tubes. The inner wall is also heated by the heating means or the heat retaining means located on the outer peripheral surface of the rotary container, as necessary, and thus, the drying time of this mixture is shortened by heat conduction from the inner wall.

Preferably, the rotation-type dryer includes, inside the rotary container, an addition means for adding an additive to the content accommodated in the rotary container. Examples of the addition means include a spraying device. By using the rotation-type dryer having the addition means, it is also possible to add and mix a surface additive as an additive to the mixture of the particulate hydrogel and the fine powder granulated product accommodated in the rotary container, and to heat and dry the mixture by contact with the plurality of heating tubes or heat conduction. In this case, a surface-crosslinking step to be described below and the drying step are performed in one step, and thus the production efficiency is improved.

As long as the object of the present invention is not impaired, the rotation-type dryer may include an additional fluidizing means for fluidizing the contents in addition to the stirring of the contents by the rotation of the rotary container. Examples of the additional fluidizing means include a scraping plate and a stirring blade which are installed on the inner surface of the rotary container.

As long as the object of the present invention is achieved, the number of dryers that can be used in the drying step may be only one or may be two or more. A plurality of dryers having different specifications may be used in combination. For example, the above-described rotation-type dryer may be used in combination with another stirring dryer that is not classified as the rotation-type dryer, a band dryer classified as a material transfer type, or the like. It is preferable to include at least one stirring dryer, but the type and number of dryers to be combined are not limited.

Preferably, in the drying step, a dryer having a function of introducing a gas into the inside thereof (preferably, a means for introducing and discharging a gas) is used. Examples of the means for introducing and discharging a gas include an inlet and an outlet for a gas. The gas acts as a carrier gas and promotes drying by discharging water vapor or the like generated during drying to the outside of the device. In addition, in a case of using a heated gas, the gas also acts as a heat medium, which further promotes drying. Preferably, nitrogen, water vapor, a mixed gas of these and air, or the like is used. In a case of using a mixed gas containing water vapor (hereinafter also referred to as a high-humidity mixed gas), the inside of the device is brought into a low-oxygen state, and oxidation and/or deterioration during drying is prevented. As a result, the performance of the water-absorbent resin can be improved and the coloring of the water-absorbent resin can be reduced. Furthermore, it is possible to prevent the particulate hydrogel and the fine powder granulated product from being aggregated and agglomerated during drying, which is preferable.

In the drying step, a dryer having a function of setting the inside thereof to a pressurized, normal pressure, or reduced pressure state may be used. In order to set the inside to the pressurized state, adjustment is made by, for example, increasing an amount of carrier gas to be introduced into the dryer. Preferably, a pressurization degree relative to the atmospheric pressure is slight pressurization of more than 0 kPa and 0.01 kPa or less. In order to set the inside to the reduced pressure state, the pressurization degree is adjusted by, for example, changing an amount of an exhaust gas to be suctioned (carrier gas to be introduced, water vapor generated during drying, and the like) from the dryer.

A depressurization degree relative to the atmospheric pressure is preferably slight depressurization of more than 0 kPa and 5 kPa or less, more preferably more than 0 kPa and 2 kPa or less, and still more preferably 0.01 kPa or more and 0.5 kPa or less. When the depressurization degree is set within the above range, water vapor and the like generated during drying can be efficiently removed without excessively taking away the heat inside the dryer, which shortens the drying time. In addition, the particulate hydrogel and the fine powder granulated product are prevented from being aggregated in the drying step.

Note that the "pressurization degree relative to the atmospheric pressure" and the "depressurization degree relative to the atmospheric pressure" mean a differential pressure with respect to the atmospheric pressure, and are expressed as an absolute value of the difference from the atmospheric pressure. For example, in a case where the atmospheric pressure is the standard atmospheric pressure (101.3 kPa) and the depressurization degree relative to the atmospheric pressure is 10 kPa, the actual air pressure is 91.3 kPa.

In the drying step, an atmospheric dew point inside the dryer may be adjusted by introducing the gas into the dryer from one or more points. It is preferable to appropriately adjust the atmospheric dew point mainly depending on the moisture content of the particulate hydrogel to be charged into the dryer, or the like. The atmospheric dew point is measured at the time of exhaust from the dryer, and is preferably 60°C or higher, more preferably 65°C or higher, and still more preferably 70°C or higher. The upper limit is not particularly limited, but is preferably 100°C or lower. When the dew point is in the above range, drying is accelerated, the moisture content of the obtained (particulate) dried polymer is adjusted to a predetermined range, and the water absorption performance is improved.

Drying conditions are appropriately selected depending on the type of the dryer or the moisture content of the particulate hydrogel or the like. A drying temperature (material temperature or heat medium temperature) is preferably 100°C or higher and 300°C or lower, more preferably 150°C or higher and 250°C or lower, still more preferably 160°C or higher and 220°C or lower, and particularly preferably 170°C or higher and 200°C or lower. When the drying temperature is within the above range, the drying time becomes appropriate, and it is economical. Further, when the drying temperature is within the above range, deterioration of physical properties and/or significant coloration of the obtained water-absorbent resin is less likely to occur, and it is preferable. In addition, from the viewpoint of making the CRC of the obtained water-absorbent resin more than 25 g/g, it is preferable that the drying temperature condition is the temperature condition described in WO 22/163849.

In addition, the drying time is preferably 1 minute or longer and 10 hours or shorter, more preferably 5 minutes or longer and 2 hours or shorter, still more preferably 10 minutes or longer and 120 minutes or shorter, and particularly preferably 20 minutes or longer and 60 minutes or shorter. When the drying time is within the above range, it is not necessary to excessively increase the drying temperature, and deterioration of physical properties and/or significant coloration of the water-absorbent resin is less likely to occur, which is preferable. In addition, when the drying time is within the above range, there is no need of an excessively huge dryer, and it is possible to avoid a decrease in throughput, which is economical.

In the production method according to the present invention, from the viewpoint of drying efficiency, in a case where the dryer is a rotation-type dryer, the Froude number (Fr = ω2 * r/g) is appropriately set depending on the device size, the amount of drying treatment (the amount of drying per hour), and the like. The Froude number Fr is in a range of preferably 0.001 or more and 1 or less, more preferably 0.005 or more and 0.5 or less, still more preferably 0.01 or more and 0.3 or less, and particularly preferably 0.02 or more and 0.2 or less. The Froude number Fr is a ratio of a centrifugal acceleration ω2 * r acting on an object to be dried, which is stirred in a rotary container, to the gravitational acceleration g (ω is an angular velocity of the rotating body: rad/sec, and r is a representative radius of the rotating body: m).

In a case of a stirring dryer having a stirring means for stirring an object to be dried with a rotating shaft equipped with a stirring blade, the rotation speed of the rotating shaft is appropriately set depending on the device, but the rotation speed is preferably set such that the Froude number Fr is within the above range. Examples of the stirring blade include an arm, a blade, a paddle, and a cut disk (CD). The specific rotation speed is in a range of usually 1 rpm or more and 10000 rpm or less, more preferably 5 rpm or more and 500 rpm or less, and still more preferably 10 rpm or more and 300 rpm or less.

A peripheral speed (V) of the stirring blade defined by the following equation (3) is appropriately set depending on the device, but is usually 0.15 m/s or more and 25 m/s or less.

$$\text{Peripheral speed (V) (m/s)} = 2\pi r \times n/60 \cdots (3)$$

Here, in the equation (3), V is the peripheral speed (unit: m/s) of the stirring blade, r is the diameter (unit: m) of the stirring blade, and n is the rotation speed (unit: rpm) of the stirring blade per unit time.

In a case of a rotary stirrer which has a rotating container with an object to be dried placed inside, the rotation speed of the container is appropriately set depending on the device size, the amount of drying treatment (the amount of drying per hour), and the like. The rotation speed of the container is preferably 1 rpm or more and 250 rpm or less, more preferably 1 rpm or more and 100 rpm or less, and still more preferably 2 rpm or more and 50 rpm or less. The maximum peripheral speed is not particularly limited, but is preferably 0.05 m/s or more and 10 m/s or less, more preferably 0.1 m/s or more and 8 m/s or less, and still more preferably 0.15 m/s or more and 5 m/s or less.

A filling ratio in the rotation-type dryer (a ratio of a filling volume of a content ($m^3$) to the effective volume of the rotary container ($m^3$)) is appropriately selected. The filling ratio is in a range of preferably 5% or more and 95% or less, more preferably 6% or more and 50% or less, and still more preferably 10% or more and 40% or less, from the viewpoint of heat treatment efficiency.

In addition, in the case of using the rotation-type dryer, it is preferable to increase the heat transfer area relative to the internal volume of the rotary container to efficiently transfer heat to the content of the rotary container. The heat transfer area relative to the internal volume is defined as a ratio of a heat transfer area ($m^2$) to the effective volume ($m^3$) of the rotary container (heat transfer area/effective volume). When this ratio is larger, the heat transfer efficiency is improved, thereby increasing a temperature rise rate of the content. As a result, the drying time is shortened, and thus, thermal and mechanical damage is reduced and productivity is improved. This ratio is appropriately set depending on the specifications and form of the dryer, the shape of the content, and the like, but is preferably 10 $m^{-1}$ or more, more preferably 12 $m^{-1}$, and still more preferably 15 $m^{-1}$ or more. Note that the effective volume means the internal volume of the rotary container placing the content , and the heat transfer area means the area of a heating surface capable of applying heat to the content placed in the rotary container. Specifically, the sum of the area of the outer peripheral surface of the plurality of heating tubes and the area of the inner peripheral surface of the rotary container is the heat transfer area.

(Additive)

Examples of the additive to be used in the drying step include a surface crosslinking agent (post-crosslinking agent) described below, in addition to the gel fluidizer (surfactant, polymer lubricant, and the like) described above. When the surface crosslinking agent is added before drying and during drying, adhesion during stirring and drying can be reduced, and further, a general surface crosslinking effect after drying (for example, improvement of fluid retention capacity under pressure) is exhibited, and thus, an advantage that a surface-crosslinking step after the drying step can also be omitted is obtained. From the viewpoint of making the CRC of the obtained water-absorbent resin more than 25 g/g, it is preferable to add the above-mentioned hydrogen peroxide before or during drying.

[3-2-5] Surface-crosslinking step

The production method of the present invention may include a surface-crosslinking step. The surface-crosslinking step is a step of performing a crosslinking reaction in a surface layer portion (a region from the particle surface to a depth of about several tens $\mu$m) of the particles of the water-absorbent resin. Typically, the surface-crosslinking step includes a surface crosslinking agent addition step of adding a surface crosslinking agent that reacts with a functional group (particularly, a carboxy group) of the water-absorbent resin to the particulate hydrogel or the dried polymer, and a heat treatment step of subjecting the particulate hydrogel or the dried polymer containing the surface crosslinking agent to a heat treatment, and preferably includes a cooling step after the heat treatment step. Note that, if necessary, a sizing step described below in [3-2-7] is performed after the drying step and before the surface-crosslinking step to obtain a particulate dried polymer having a preferred particle size. For example, in a case where the drying step is carried out by static drying, the obtained dried polymer contains relatively large aggregates, and thus the sizing step is preferably carried out before the surface-crosslinking step.

[3-2-5-1] Surface crosslinking agent addition step

The surface crosslinking agent addition step is a step of adding a surface crosslinking agent to the particulate hydrogel and/or the particulate dried polymer. The surface crosslinking agent is added to the particulate hydrogel before or during drying, or the particulate dried polymer after drying or sizing. The particulate hydrogel and/or the particulate dried polymer may contain a fine powder of granulated product.

In a case where the particulate hydrogel obtained in the gel grinding step is subjected to the surface-crosslinking step during drying, the moisture content of the particulate hydrogel at the time of addition of the surface crosslinking agent is preferably in a range of 10 mass% or more and 50 mass% or less, more preferably in a range of 15 mass% or more and 45 mass% or less, and still more preferably in a range of 20 mass% or more and 40 mass% or less. When the surface crosslinking agent is added in such a range, excessive aggregation and adhesion during drying are reduced. Furthermore, the effect of improving the fluid retention capacity under pressure obtained by carrying out the surface-crosslinking step after the drying step is also exhibited in a case where the surface crosslinking is carried out simultaneously with the drying, which is preferable.

In the case where the surface crosslinking is performed simultaneously with the drying, the surface-crosslinking step and the sizing step after the drying step can be omitted, and thus the production process can be significantly simplified. Furthermore, the generation of fine powder and the destruction of the surface-crosslinked structure, which are caused by process damage to the water-absorbent resin in the surface-crosslinking step and a transportation step that are separately required, do not substantially occur, which is preferable.

In addition, in a case where the surface-crosslinking step is separately performed after the drying step, the solid fraction of the (particulate) dried polymer at the time of adding the surface crosslinking agent is preferably 80 mass% or more, more preferably 85 mass% or more and 99.8 mass% or less, still more preferably 90 mass% or more and 99.7 mass% or less, still even more preferably 92 mass% or more and 99.5 mass% or less, particularly preferably 96 mass% or more and 99.5 mass% or less, and extremely preferably 98 mass% or more and 99.5 mass% or less.

The temperature of the water-absorbent resin to be subjected to the surface-crosslinking step after the drying step, that is, the temperature of the (particulate) dried polymer at the time of addition of the surface crosslinking agent is preferably 40 to 120°C, and more preferably 60°C or higher and 100°C or lower. In the case where the surface crosslinking is performed simultaneously with the drying, the temperature of the water-absorbent resin during the drying, that is, the temperature of the particulate hydrogel at the time of adding the surface crosslinking agent is preferably in a range of 70°C or higher and 150°C or lower, and more preferably in a range of 80°C or higher and 130°C or lower. This temperature is measured in the same manner as the gel temperature described above in the drying step.

(Surface crosslinking agent)

As the surface crosslinking agent that can be used in the surface-crosslinking step, the surface crosslinking agents listed in the section [2-3-2] above can be used, and the description in the section can be incorporated herein.

(Surface crosslinking agent solution)

The amount of the surface crosslinking agent added is preferably 5 mass% or less, more preferably 3 mass% or less, and still more preferably 2 mass% or less in terms of solid content, relative to the particulate hydrogel or the particulate dried polymer. The lower limit value is preferably 0.001 mass%.

As the addition form of the surface crosslinking agent, the surface crosslinking agent is preferably added as a solution in water or an organic solvent, from the viewpoint of ease of addition. A concentration of the surface crosslinking agent solution is preferably 1 mass% or more, and more preferably 2 mass% or more. The total amount of a solvent selected from water and an organic solvent is preferably 0 mass% or more and 10 mass% or less, more preferably 0.1 mass% or more and 8 mass% or less, and still more preferably 0.5 mass% or more and 5 mass% or less in terms of solid content, relative to the particulate hydrogel or the particulate dried polymer. In a case where water and an organic solvent are used in combination as the solvent of the surface crosslinking agent solution, water is preferably the main component in the solvent.

[3-2-5-2] Heat treatment step

The heat treatment step constituting the surface-crosslinking step is a step of subjecting the particulate hydrogel or the particulate dried polymer containing the surface crosslinking agent to heat treatment to obtain a surface-crosslinked dried polymer.

<Surface crosslinking temperature>

A surface-crosslinked dried polymer is obtained by heating the particulate hydrogel or the particulate dried polymer containing the surface crosslinking agent to 100°C or higher. The heating temperature (surface crosslinking temperature) is appropriately selected depending on the type of the surface crosslinking agent to be added. From the viewpoint of heat treatment efficiency, the surface crosslinking temperature is preferably 100°C or higher and 250°C or lower, more preferably 120°C or higher and 230°C or lower, and still more preferably 150°C or higher and 210°C or lower. When the surface crosslinking temperature and the type and amount used of the surface crosslinking agent are appropriately selected, the water-absorbent resin to be produced by the production method of the present invention can have a CRC of more than 25 g/g.

<Heating time>

The time for the heat treatment at the surface crosslinking temperature is appropriately set depending on the moisture content of the particulate hydrogel or the particulate dried polymer, the type of the surface crosslinking agent, and the like. As a rough standard, the heating may be performed until the moisture content of the water-absorbent resin powder to be obtained becomes 10 mass% or less, and the time for the heat treatment is in a range of 10 minutes or longer and 120 minutes or shorter, and preferably in a range of 30 minutes or longer and 90 minutes or shorter.

<Heating Form>

As long as the object of the present invention is achieved, a heating device to be used in the heat treatment step is not particularly limited. As the heating device, a device having a stirring mechanism in a conduction heat transfer form by solid-solid contact (hereinafter, sometimes referred to as a stirring type indirect heating type) is suitably used from the viewpoint that heating unevenness is less likely to occur. A surface-crosslinked particulate dried polymer is obtained after the heat treatment, and thus, the stirring dryer (preferably a rotation-type dryer) as described above in the drying step is preferably used also as the heating device in the heat treatment step. For example, it is preferable to add the surface crosslinking agent as an additive to the particulate hydrogel and heat the particulate hydrogel by using the above-described rotation-type dryer with a heating tube. In this manner, the drying step and the surface-crosslinking step are simultaneously performed, and the particulate dried polymer that has been adjusted to have a predetermined moisture content (solid fraction) and that has been surface-crosslinked is obtained in one step.

[3-2-6] Cooling step

The production method of the present invention may include a cooling step. The cooling step is a step of forcibly cooling the (particulate) dried polymer or the surface-crosslinked (particulate) dried polymer to adjust the temperature to a desired temperature after the drying step or the heat treatment step described above and before the sizing step described below. In the case where the surface-crosslinking step and the drying step are carried out in one step in the above-mentioned dryer, the surface crosslinking treatment is appropriately carried out and the solid fraction or the moisture content of the (particulate) dried polymer or the surface-crosslinked (particulate) dried polymer is adjusted to a desired range in the rotary container. Thereafter, the cooling step is performed before the sizing step.

Specifically, relative to a temperature t°C of the (particulate) dried polymer after the drying step and/or the surface-crosslinked (particulate) dried polymer after the surface-crosslinking step, the (particulate) dried polymer and/or the surface-crosslinked (particulate) dried polymer is forcibly cooled to preferably (t-20)°C or lower, more preferably (t-30)°C or lower, and still more preferably (t-40)°C or lower. For example, in a case where the temperature t of the (particulate) dried polymer and/or the surface-crosslinked (particulate) dried polymer is 150°C or higher and 250°C or lower, the (particulate) dried polymer and/or the surface-crosslinked (particulate) dried polymer is forcibly cooled to preferably 50°C or higher and 130°C or lower, more preferably 60°C or higher and 100°C or lower, and still more preferably 65°C or higher and 90°C or lower before being subjected to the sizing step. When the (particulate) dried polymer and/or the surface-crosslinked (particulate) dried polymer is cooled to this temperature range, workability and classification accuracy at the time of crushing in the sizing step are improved, and the physical properties of the produced water-absorbent resin are improved.

<Cooling method>

In the cooling step, the method for cooling the (particulate) dried polymer and/or the surface-crosslinked (particulate) dried polymer is not particularly limited. Preferably, a continuous cooler having a cooling means of a ventilation heat transfer type or a conduction heat transfer type is used.

[3-2-7] Sizing step

The production method of the present invention may include a sizing step. The sizing step is a step of adjusting the particle size of the dried polymer or the surface-crosslinked (particulate) dried polymer. When the sizing step is performed after the surface-crosslinking step, a water-absorbent resin powder having a particle size or a particle size distribution controlled at a high level is obtained.

Preferably, the sizing step includes a pulverizing step and/or a classification step. More preferably, the sizing step includes a crushing step and/or a classification step. A sizing step of obtaining a water-absorbent resin powder having a controlled particle size and a controlled particle size distribution only by a pulverizing step or a crushing step is preferable, and a sizing step of obtaining a water-absorbent resin powder having a controlled particle size and a controlled particle size distribution only by a crushing step is ideal.

The pulverizing step is a step of pulverizing, with a grinder, a lump-shaped dried polymer or a strongly aggregated particulate dried polymer obtained in the case of performing static drying in the drying step or the heat treatment step, to adjust the particle size. Note that the pulverizing step is different from the gel grinding step described above in that the dried polymer to be ground has undergone the drying step.

Examples of the grinder to be used in the pulverizing step include high-speed rotary grinders such as a roll mill, a hammer mill, a screw mill, and a pin mill; vibration mills; knuckle-type grinders; and cylindrical mixers.

The crushing step is a step of crushing the (particulate) dried polymer loosely aggregated through the drying step or the heat treatment step with a crusher to adjust the particle size. In the crushing step, the particle size can be adjusted by pulverizing weaker than that in the pulverizing step described above.

As the crusher to be used in the crushing step, those causing little mechanical damage to the (particulate) dried polymer or the surface-crosslinked (particulate) dried polymer are preferred, and specific examples thereof include a roll granulator (Matsubo Corporation), a granulator (Kurimoto, Ltd.), and a Lundell mill (Tokuju Corporation).

The classification step is a step of removing coarse particles and fine powder from the (particulate) dried polymer, the surface-crosslinked (particulate) dried polymer, or their pulverized product or crushed product, using a classifier. As the classifier to be used in the classification step, a vibration type or swing type sieve classifier using a sieve mesh is used.

The size of the coarse particles and the fine powder to be removed in the classification step of the sizing step is appropriately set depending on the particle size of the water-absorbent resin or the water-absorbent agent as a final product. The particle size of the coarse particles is preferably 2000 $\mu$m or more, and more preferably 850 $\mu$m or more. As described above, the fine powder is the water-absorbent resin that passes through a sieve having a mesh size of 150 $\mu$m.

(Particle size of dried polymer or surface-crosslinked dried polymer)

From the viewpoint of reducing fine powder, the mass-average particle size (D50) of the (particulate) dried polymer or the surface-crosslinked (particulate) dried polymer to be subjected to the sizing step is preferably 200 $\mu$m or more, more preferably 300 $\mu$m or more, still more preferably 400 $\mu$m or more, and particularly preferably 500 $\mu$m or more. From the viewpoint of improving the efficiency of the crushing step, the mass-average particle size is preferably 2000 $\mu$m or less, more preferably 1500 $\mu$m or less, and still more preferably 1000 $\mu$m or less. The mass-average particle size may be measured by the same method as the method described in "(3) Mass-Average Particle Size (D50) and Logarithmic Standard Deviation of Particle Size Distribution" in columns 27 and 28 of US 7638570 B.

(Particle size of water-absorbent resin powder)

From the viewpoint of water absorption performance, the mass-average particle size (D50) of the water-absorbent resin powder obtained through the sizing step is preferably 200 $\mu$m or more, more preferably 200 $\mu$m or more and 600 $\mu$m or less, still more preferably 250 $\mu$m or more and 550 $\mu$m or less, and particularly preferably 300 $\mu$m or more and 500 $\mu$m or less. The mass-average particle size may be measured by the same method as the method described in "(3) Mass-Average Particle Size (D50) and Logarithmic Standard Deviation of Particle Size Distribution" in columns 27 and 28 of US 7638570 B.

From the viewpoint of improving the quality of the water-absorbent resin (water-absorbent agent) to be produced, the main component of the water-absorbent resin powder is preferably a particle having a particle size of 150 $\mu$m or more and 850 $\mu$m or less. The proportion of the particles having a particle size of 150 $\mu$m or more and 850 $\mu$m or less contained in the water-absorbent resin powder is preferably 90 mass% or more and 100 mass%, more preferably 95 mass% or more and 100 mass% or less, still more preferably 97 mass% or more and 100 mass% or less, and particularly preferably 99 mass% or more and 100 mass% or less. The proportion of the particles having a particle size of less than 150 $\mu$m and the proportion of particles having a particle size of more than 850 $\mu$m, both of which are contained in the water-absorbent resin powder, are preferably 10 mass% or less, more preferably 5 mass% or less, still more preferably 3 mass% or less, and particularly preferably 1 mass%.

[3-2-8] Step of adding another additive

The production method of the present invention may include a step of adding another additive. The step of adding another additive is an optional step performed for the purpose of imparting various additional functions to the water-absorbent resin (water-absorbent agent) and improving the water absorption performance, and is a step of adding the following other additives to the water-absorbent resin powder obtained through the surface-crosslinking step. From the viewpoint of the effect of addition, the other additives described below are preferably present on the surface of each particle of the water-absorbent resin powder. Accordingly, the step of adding another additive is preferably performed simultaneously with or separately from the surface-crosslinking step, and more preferably performed after the surface-crosslinking step.

Examples of the other additives include the other additives listed in the section of [2-3-6], and the description in the section can be incorporated herein.

[3-2-9] Other steps

The production method of the present invention may further include a rewetting step, a pulverizing step, a classification step, a granulation step, a transportation step, a storage step, a packaging step, a safekeeping step, and the like, as necessary, in addition to the above-described steps.

The present invention may include inventions presented in the following [1] to [11].

[1] A water-absorbent resin satisfying the following conditions (a) to (d):

(a) a value of 0°C Vortex being 30 seconds or shorter;
(b) a ratio of the value of 0°C Vortex to a value of 30°C Vortex (Vortex ratio (0°C/30°C)) being 5 or less;
(c) a GEX value being 17 or more; and
(d) a value of CRC being a value exceeding 25 g/g.

[2] The water-absorbent resin according to [1], including

a crosslinked polymer of an acid group-containing unsaturated monomer, wherein
at least a part of the acid group-containing unsaturated monomer is a neutralized acid group-containing unsaturated monomer, and
the neutralized acid group-containing unsaturated monomer contains one or more salts selected from the group consisting of a potassium salt, a lithium salt, and an ammonium salt.

[3] The water-absorbent resin according to [1] or [2], wherein a ratio of a number of moles of the one or more salts selected from the group consisting of a potassium salt, a lithium salt, and an ammonium salt to a total number of moles of the neutralized acid group-containing unsaturated monomer is 50 mol% or more and 100 mol% or less.

[4] The water-absorbent resin according to any one of [1] to [3], having a mass-average particle size of 50 $\mu$m or more and 600 $\mu$m or less.

[5] The water-absorbent resin according to any one of [1] to [4], wherein a content of a residual volatile component is 0.4 mass% or less with respect to a total mass of the water-absorbent resin.

[6] The water-absorbent resin according to any one of [1] to [5], wherein

a content of fine powder is 15 mass% or less with respect to the total mass of the water-absorbent resin, and
the fine powder is a water-absorbent resin that passes through a sieve having a mesh size of 150 $\mu$m in a case where the entire water-absorbent resin is classified using the sieve.

[7] A method for producing a water-absorbent resin, the method including a polymerization step of subjecting a monomer composition containing an acid group-containing unsaturated monomer and optionally containing a monomer other than the acid group-containing unsaturated monomer to crosslinking polymerization to obtain a crosslinked hydrogel polymer, wherein

at least a part of the acid group-containing unsaturated monomer is a neutralized acid group-containing unsaturated monomer,
the neutralized acid group-containing unsaturated monomer contains one or more salts selected from the group consisting of a potassium salt, a lithium salt, and an ammonium salt,
a total content of the acid group-containing unsaturated monomer and the monomer other than the acid group-containing unsaturated monomer in the monomer composition is 30 mass% or more and less than 55 mass% with respect to a total mass of the monomer composition, and
a polymerization initiation temperature in the polymerization step is 60°C or higher.

[8] The method for producing a water-absorbent resin according to [7], wherein a solid fraction in the crosslinked hydrogel polymer is 60 mass% or less with respect to a total mass of the crosslinked hydrogel polymer.

[9] The method for producing a water-absorbent resin according to [7] or [8], further including a hydrogel grinding step of grinding the crosslinked hydrogel polymer to obtain a particulate hydrogel.

[10] The method for producing a water-absorbent resin according to any one of [9], the method including grinding the crosslinked hydrogel polymer in such a manner that a mass-average particle size in terms of solid content of the particulate hydrogel is 1 mm or less during the hydrogel grinding step.

[11] The method for producing a water-absorbent resin according to any one of [7] to [10], the method including polymerizing the monomer composition by aqueous solution polymerization to obtain the crosslinked hydrogel polymer during the polymerization step.

The present invention is not limited to each embodiment described above, and it may be changed in various ways within the scope of the claims. Thus, an embodiment achieved by appropriately combining technical means described herein with different embodiments will be included in the technical scope of the present invention.

Examples

The present invention will be described more specifically according to the following Examples and Comparative Examples, but the present invention is not limited thereto. Examples obtained by appropriately combining the technical means disclosed in each Example are also included in the scope of the present invention.

Note that in the following description, a "water-absorbent resin" means a particulate dried product which has been subjected to a drying step, a surface-crosslinked particulate dried product, a surface-crosslinked water-absorbent resin powder, and a surface-crosslinked water-absorbent resin powder, and a "hydrogel" means a crosslinked hydrogel polymer or a particulate hydrogel, which has not been subjected to a drying step.

For electric devices (including measurement devices of physical properties of the water-absorbent resins) to be used in Experimental Examples, unless otherwise noted, a power supply of 200 V or 100 V at 60 Hz was used. Unless otherwise noted, physical properties of the water-absorbent resin and the hydrogel described below were measured under conditions of room temperature (20°C to 25°C) and a relative humidity of 50%RH $\pm$ 10%.

For convenience, "liter" is sometimes denoted as "1" or "L".

(Evaluation methods)

The physical properties and the like of the water-absorbent resins and the hydrogels obtained in Examples 1 to 6 and Comparative Examples 1 to 4 were measured and evaluated by the methods shown below.

(A) "CRC"

The CRC of the water-absorbent resin was measured in accordance with NWSP 241.0.R2 (15). Specifically, 0.2 g of the water-absorbent resin was put in a nonwoven fabric bag, and then immersed in a large excess of a 0.9 mass% sodium chloride aqueous solution for 30 minutes for free swelling. Thereafter, the mass after the water-absorbent resin was centrifuged (250 G) for 3 minutes to remove water was measured, and the fluid retention capacity (unit: g/g) was calculated.

(B) "PSD"

The mass-average particle size (D50) and the logarithmic standard deviation ($\sigma\zeta$) of the particle size distribution of the water-absorbent resin were measured by the same method as the method described in "(3) Mass-Average Particle Size (D50) and Logarithmic Standard Deviation of Particle Size Distribution" in columns 27 and 28 of US 7638570 B. Here, a "fine powder content" is a content (mass%) of the water-absorbent resin that passes through a sieve having a mesh size of 150 $\mu$m with respect to the total mass of the water-absorbent resin.

(C) "Moisture content and solid fraction"

The moisture content of the water-absorbent resin was measured in accordance with the NWSP. Specifically, the moisture content of the water-absorbent resin was measured by the method for measuring a moisture content described in NWSP 230.0.R2 (15), except that the mass of the sample was changed to about 1.0 g, the drying temperature was changed to 180°C, and the drying time was changed to 24 hours. Specifically, first, about 1.0 g of the water-absorbent resin was accurately weighed (the mass is denoted by M (g)). M (g) of the water-absorbent resin was put into an aluminum cup having a bottom surface diameter of 50 mm, and then a total mass $W_1$ (g) of the cup containing the sample was accurately weighed. Next, the cup was left to stand in an oven set to an atmosphere temperature of 180°C. After a lapse of 24 hours, the cup was taken out from the oven, and a total mass $W_2$ (g) of the cup was accurately weighed. The moisture content (100 - $\alpha$) (mass%) of the water-absorbent resin was determined according to the following equation (4) using $W_1$ (g) and $W_2$ (g). Note that $\alpha$ is a solid fraction (mass%) of the water-absorbent resin.

$$\text{Moisture content of water-absorbent resin } (100 - \alpha) \text{ (mass\%)} = \{(W_1 - W_2)/M\} \times 100 \cdots (4)$$

The moisture content and the solid fraction of the hydrogel were also measured in accordance with the NWSP. Specifically, the same method as the method for measuring the moisture content of the water-absorbent resin described above was used, except that the mass of the sample was changed to about 2.0 g. That is, the accurate mass M' (g) of the sample (hydrogel), the total mass $W_3$ (g) of the aluminum cup containing the sample, and the total mass $W_4$ (g) of the cup after being taken out from the oven were accurately weighed. Next, the moisture content $(100 - \alpha')$ (mass%) of the hydrogel was determined according to the following equation (5) by using $W_3$ (g) and $W_4$ (g) in the same manner as in the method for measuring the moisture content of the water-absorbent resin described above. Note that $\alpha'$ is the solid fraction (mass%) of the hydrogel. The moisture content and the solid fraction of the hydrogel measured here were used as the moisture content and the solid fraction of the hydrogel for calculation of other parameters.

$$\text{Moisture content of hydrogel } (100 - \alpha') \text{ (mass\%)} = \{(W_3 - W_4)/M'\} \times 100 \cdots (5)$$

..

(D) "0°C Vortex and 30°C Vortex"

0.02 parts by mass of Food Blue No. 1 (Brilliant Blue) was added to 1000 parts by mass of a 0.90 mass% sodium chloride aqueous solution to prepare a test liquid. 50 ml of the test liquid was measured into a 100-ml beaker. The temperature of the test liquid in the beaker was adjusted to 0°C, and 2.00 g of the water-absorbent resin was charged to the test liquid while stirring the test liquid at 600 rpm using a cylindrical stirring bar having a length of 40 mm and a thickness of 8 mm. The time at which the water-absorbent resin was charged to the test liquid was defined as a starting point, and the time at which the water-absorbent resin absorbed saline solution to cover the stirrer tip was defined as an end point, based on the standard described in JIS K7224-1996 "Explanation of Test Method for Water Absorption Rate of Super absorbent Polymers". The time from the starting point to the end point was defined as "0°C Vortex" (unit; second). Note that in a case where the time from the starting point to the end point is shorter than 1.0 seconds, the time is expressed to the first decimal place.

In addition, "30°C Vortex" was measured by the same method as the measurement method of "0°C Vortex" except that a test liquid whose liquid temperature was adjusted to 30°C was used. Subsequently, a Vortex ratio (0°C/30°C) = (0°C Vortex)/(30°C Vortex) was calculated using "0°C Vortex" and "30°C Vortex". Note that the measurements of 0°C Vortex and 30°C Vortex were performed under conditions of room temperature (20°C to 25°C) and a relative humidity of 50% RH $\pm$ 10%.

(E) "Ext"

1.0 g of the water-absorbent resin was added to 200 ml of a 0.9 mass% sodium chloride aqueous solution, and the mixture was stirred at 500 rpm for 16 hours. Then, the amount of the material dissolved in the aqueous solution was measured by pH titration, and the measured value was defined as Ext (water-soluble content) (unit: mass%).

In addition, the amount of the material dissolved in the aqueous solution was measured in the same manner as in the method for measuring Ext of the water-absorbent resin described above, except that 2.0 g of the hydrogel was used instead of 1.0 g of the water-absorbent resin. Subsequently, the amount of the material was converted into a solid content based on the moisture content of the hydrogel measured by the method (C), thereby calculating Ext (unit; mass%) in the hydrogel.

(F) "GEX"

A GEX value of the water-absorbent resin was calculated based on the following equations (1) and (2) using the CRC of the water-absorbent resin and the Ext (water-soluble content) of the water-absorbent resin measured by the above-described method. Note that in the following equations (1) and (2), the CRC is represented by y (g/g), and the Ext is represented by x (mass%).

For x > 1,

$$\text{GEX value} = (y + 17)/\ln(x) \cdots (1)$$

where ln(x) is the natural logarithm of x.

For $x \leq 1$,

$$\text{GEX value} = (y)/(x) \cdots (2)$$

(G) Particle Size of Particulate Hydrogel

<Particle Size Distribution and Mass-Average Particle Size (Gel D50) of Particulate Hydrogel>

The particle size distribution and the mass-average particle size (Gel D50) of the particulate hydrogel were measured by the following methods.

20 g of the particulate hydrogel (solid fraction $\alpha$ mass%) at a temperature of 20 to 25°C was added to 1000 g of a 20 mass% sodium chloride aqueous solution containing 0.08 mass% of sodium polyoxyethylene lauryl sulfate (surfactant) (hereinafter referred to as "surfactant aqueous solution") to obtain a dispersion. Subsequently, the dispersion was stirred at 300 rpm for 16 hours using a stirring chip of 50 mm length $\times$ 7 mm diameter. The container used was a cylindrical container (height of 21 cm, diameter of 8 cm, internal volume of about 1.14 L) made of polypropylene.

After the stirring was completed, the dispersion was charged into a central portion of a stacked sieve, which was formed by stacking eight JIS standard sieves, from the upper side of the stacked sieve, the stacked sieve being placed on a rotating disk. The sieves constituting the stacked sieve all had a diameter of 21 cm, and mesh sizes of the sieves were 8 mm, 4 mm, 2 mm, 1 mm, 0.60 mm, 0.30 mm, 0.15 mm, and 0.075 mm in order from the upper sieve. Subsequently, the entire particulate hydrogel remaining in the container was washed out onto the stacked sieve using 100 g of another surfactant aqueous solution. Thereafter, 6000 g of another surfactant aqueous solution was poured from the height of 30 cm from the upper portion of the stacked sieve using a shower (72 holes, liquid amount: 6.0 [L/min]) while rotating the stacked sieve by hand (speed: 20 rpm), thereby classifying the particulate hydrogel. The operation was performed by pouring the solution four times evenly in such a manner that the pouring range (50 cm$^2$) was spread over the entire upper surface of the stacked sieve. The classified particulate hydrogel on the top sieve of the stacked sieve was drained for about 2 minutes and then weighed. The hydrogel on the second and subsequent sieves of the stacked sieve was classified in the same manner, and the particulate hydrogel remaining on each sieve after draining was weighed. Note that the sieves constituting the stacked sieve were changed as appropriate depending on the particle size of the particulate hydrogel. For example, in a case where the particle size of the particulate hydrogel was small (fine) and clogging occurred in the sieve with a mesh size of 0.15 mm and/or the sieve with a mesh size of 0.075 mm, the sieve with a mesh size of 0.15 mm and/or the sieve with a mesh size of 0.075 mm were replaced with JIS standard sieves with larger diameters (a sieve with a diameter of 30 cm and a mesh size of 0.15 mm and/or a sieve with a diameter of 30 cm and 0.075 mm), and classification was performed.

From the mass of the particulate hydrogel remaining on each sieve, a proportion (mass%) of the particulate hydrogel to the total mass of the particulate hydrogel was calculated by the following equation (6). The mesh size of each sieve used for classification was converted based on the following equation (7). The converted mesh size and mass% of the particulate hydrogel remaining on each sieve were plotted on logarithmic probability paper. From this graph, a value of the mesh size corresponding to 50 mass% was read, and the value is taken as the mass-average particle size (Gel D50) of the particulate hydrogel.

$$X\ (\%) = (w/W) \times 100 \cdots (6)$$

$$R\ (mm) = (20/W)^{1/3} \times r \cdots (7)$$

In the equation (6) and the equation (7),

X: mass% (%) of particulate hydrogel remaining on each sieve after classification and draining,
w: mass (g) of each particulate hydrogel remaining on each sieve after classification and draining,
W: total mass (g) of particulate hydrogel remaining on sieves after classification and draining,
R: mesh size (mm) of sieve in terms of particulate hydrogel before swelling, and
r: mesh size (mm) of sieve used for classification.

<Mass-average particle size in terms of solid content (Solid D50) of particulate hydrogel>

From the solid fraction (α) of the particulate hydrogel and the mass-average particle size (Gel D50) of the particulate hydrogel measured by the method (C) described above, the mass-average particle size in terms of solid content (the mass-average particle size of the particulate hydrogel after drying, Solid D50) was determined according to the following equation (8).

$$\text{Solid D50} = \text{Gel D50} \times (\alpha/100)^{1/3} \cdots (8)$$

In the equation (8),

Gel D50: mass-average particle size of particulate hydrogel particles (μm),
α: solid fraction (mass%) of particulate hydrogel, and
Solid D50: mass-average particle size (μm) of particulate hydrogel in terms of dried product.

(H) "Amount of residual volatile component"

An amount of volatile components derived from an organic solvent and the like incorporated into the water-absorbent resin particles was quantified, and the amount of volatile components was the amount of volatile components contained in the gas volatilized when a mixed liquid of dimethylformamide (DMF), a 25 mass% phosphoric acid aqueous solution, and the water-absorbent resin particles was heated at 110°C. The measured value was converted into a value per 1 g of the water-absorbent resin, and the value was defined as the amount of residual volatile components. A specific procedure is shown below.

(H-1) Preparation of calibration curve

Heptane, dimethylformamide (DMF), and a 25 mass% phosphoric acid aqueous solution were prepared in a glass container that can be plugged. These were cooled as necessary to suppress an error due to volatilization during measurement.

First, heptane was precisely weighed to 0.15 g in a volumetric flask having an internal volume of 200 mL, and DMF was added thereto to make the total of 200 mL, thereby preparing a standard liquid (1). Subsequently, 10 mL of the standard liquid (1) was precisely measured into a volumetric flask having an internal volume of 20 mL with a volumetric pipette, and DMF was added thereto to make the total of 20 mL, thereby diluting the standard liquid 1 2-fold, which was used as a standard liquid (2).

Similarly, the standard liquid (2) was diluted 2-fold to obtain a standard liquid (3). Similarly, the standard liquid (3) was diluted 2-fold to obtain a standard liquid (4). Further, in the same manner, the standard liquid (4) was diluted 2-fold to obtain a standard liquid (5).

4 mL of the standard liquid (1) was accurately measured and added to a vial bottle having an internal volume of 20 mL, and 5 mL of a 25 mass% phosphoric acid aqueous solution was accurately measured and added thereto. The vial bottle was quickly sealed with a septum rubber and an aluminum cap, and the vial bottle was shaken and stirred for 1 minute to mix the contents. The same operation was performed for the standard liquids (2) to (5) to prepare solutions for calibration curve preparation.

The vial bottles were heated at 110°C for 2 hours while shaking and stirring, and then each 1 mL of the gas phase was injected into a gas chromatograph to obtain chromatogram for the each solution for calibration curve preparation. The mass of heptane precisely weighed when preparing the solutions for calibration curve preparation and peak areas of the chromatograms were used to prepare a calibration curve.

(H-2) Measurement of amount of residual volatile component

DMF and a 25 mass% phosphoric acid aqueous solution were prepared. 0.10 g of each of the water-absorbent resins obtained in Examples and Comparative Examples was precisely weighed in a vial bottle having an internal volume of 20 mL. To these vial bottles, 4 mL of DMF and 5 mL of a 25 mass% phosphoric acid aqueous solution were added. The vial bottles were quickly sealed with septum rubbers and aluminum caps, and the vial bottles were shaken for 1 minute to mix the contents. The vial bottles were heated at 110°C for 2 hours while shaking and mixing, and then each 1 mL of the gas phase was injected into a gas chromatograph to obtain each chromatogram.

The amount of a volatile component contained in the water-absorbent resin (accurately weighed value of 0.10 g) was calculated from the peak area of the obtained chromatogram and the calibration curve prepared in advance. The calculated value was converted into a value per 1 g of the water-absorbent resin, and the value was defined as the amount of residual volatile component (mass%).

The following presents conditions of the gas chromatograph.

Device: GC-2010 Plus (available from Shimadzu Corporation)
Filler: Squalane 25% Shimalite (NAW) (101) 80 to 100 mesh
Column: 3.2 mmφ × 2.1 m
Column temperature: 80°C
Inlet temperature: 180°C
Detector temperature: 180°C
Detector: FID
Carrier gas: N2

[Example 1]

(Monomer composition preparation step)

The following materials were charged into a polypropylene container having a volume of 2 liters and mixed to prepare a monomer composition (a1):

- acrylic acid 372.3 g (5.17 mol);
- 10 mass% polyethylene glycol diacrylate aqueous solution (molecular weight: 523) as an internal crosslinking agent 54.05 g (0.2 mol% with respect to the monomer);
- 0.1 mass% of diethylenetriaminepentaacetic acid trisodium (DTPA•3Na) aqueous solution 25.80 g (0.0011 mol% with respect to the monomer);
- 48.5 mass% potassium hydroxide aqueous solution 131.5 g; and
- deionized water (ion-exchanged water) 298.3 g.

Next, the monomer composition (a1) was cooled with stirring. When the temperature (liquid temperature) of the monomer composition (a1) reached 50°C, 304.9 g of a 48.5 mass% potassium hydroxide aqueous solution having a temperature adjusted to 40°C was added thereto and mixed to prepare a monomer composition (a2). At this time, the temperature of the monomer composition (a2) was raised to 92.5°C due to neutralization heat.

(Polymerization step)

Next, 13.1 g of a 5.0 mass% of potassium persulfate aqueous solution (0.047 mol% with respect to the monomer) was added to the monomer composition (a2) while stirring to obtain a monomer composition (a'2). At this time, the temperature of the monomer composition (a2) was 90°C. Thereafter, the monomer composition (a'2) (monomer concentration 43 mass%, neutralization percentage of acrylic acid 73 mol%) was immediately poured into a tray-shaped container (bottom surface 340 × 340 mm, height 25 mm, inner surface: Teflon (trade name) coating) made of stainless steel in an atmospheric opening system. Note that the time from the addition of the potassium hydroxide aqueous solution to the monomer composition (a1) to the pouring of the monomer composition (a'2) into the tray-shaped container was 1 minute. The tray-shaped container was heated in advance to a surface temperature of 50°C using a hot plate (NEO HOTPLATE HI-1000, available from Iuchi Seieido Co., Ltd.), and the heating was continued until the polymerization was completed. The time from the observation of the temperature rise of the monomer composition (a'2) (from the start of polymerization) to the achievement of the maximum temperature (higher than 100°C) was 10 seconds. A crosslinked hydrogel polymer (b1) was obtained by the above polymerization reaction.

(Hydrogel grinding step)

The obtained crosslinked hydrogel polymer (b1) was charged into a screw extruder to perform gel grinding. As the screw extruder, a meat chopper was used. The meat chopper had a die with a diameter of 100 mm, a hole diameter of 6.4 mm, the number of holes of 83, an opening ratio of 34.0%, and a thickness of 10 mm at the tip (extrusion port), and had a screw shaft with an outside diameter of 86 mm and a casing with an inside diameter of 88 mm. Gel grinding (first gel grinding) was performed while supplying hot water at 80°C, water vapor, and a 10 mass% aqueous solution of lauryl dimethylaminoacetic acid betaine simultaneously with the crosslinked hydrogel polymer (b1), thereby obtaining a particulate hydrogel (c3). Note that the hot water at 80°C, the water vapor, and the lauryl dimethylaminoacetic acid betaine were supplied to be 1 mass%, 1 mass%, and 0.08 mass%, respectively, as active ingredients, with respect to the solid content of the crosslinked hydrogel polymer (b1). Subsequently, the particulate hydrogel (c3) obtained by the first gel grinding was further subjected to gel grinding (second gel grinding) while supplying hot water and water vapor in the same manner, thereby obtaining a particulate hydrogel (c2). The obtained particulate hydrogel (c2) had a mass-average particle size in terms of solid content (hereinafter referred to as "Solid D50") of 239 μm.

Subsequently, the particulate hydrogel (c2) obtained by the second gel grinding was further subjected to gel grinding (third gel grinding) while supplying hot water and water vapor in the same manner, thereby obtaining a particulate hydrogel (c1). The obtained particulate hydrogel (c1) had a Solid D50 of 150 μm.

(Drying step of particulate hydrogel)

The obtained particulate hydrogel (c1) was dried using a hot air dryer. The dryer was equipped with a basket (bottom size 30 cm × 20 cm) made of a wire net with a mesh size of 1.2 mm. 500 g of the particulate hydrogel (c1) was spread substantially uniformly on the bottom surface of the basket, and hot air at 190°C was blown from below for 30 minutes to obtain a dried product (A'1).

(Pulverizing and classification steps of dried product)

The cooled dried product (A'1) was supplied to a roll mill, pulverized, and classified using JIS standard sieves having mesh sizes of 850 μm and 150 μm. A component that passed through the 850 μm sieve but did not pass through the 150 μm sieve was collected to obtain a water-absorbent resin (A1).

[Example 2]

The particulate hydrogel (c2) obtained by the second gel grinding in (Hydrogel grinding step) of Example 1 was dried in the same manner as in (Drying step of particulate hydrogel) of Example 1. Thereafter, the particulate hydrogel (c2) was pulverized and classified in the same manner as in (Pulverizing and classification steps of dried product) of Example 1, thereby obtaining a water-absorbent resin (A2). That is, the water-absorbent resin (A2) was obtained by the same method as that in Example 1 except that the particulate hydrogel (c2) was subjected to the drying step of the particulate hydrogel without performing the third gel grinding.

[Example 3]

With the water-absorbent resin (A1) obtained in Example 1, 2 parts by mass of hydrophilic silica (REOLOSIL (trade name) QS-20, available from Tokuyama Corporation) was mixed. The mixing was performed by putting 30 g of the water-absorbent resin (A1) in a mayonnaise bottle (inside diameter: 52 mm, height: 110 mm) having a volume of 225 ml together with the hydrophilic silica, and shaking the mixture at a vibration speed of 750 CPM for 1 minute using a paint shaker (available from Toyo Seiki Seisaku-sho, Ltd.). As a result, a water-absorbent resin (A3) was obtained.

[Example 4]

With the water-absorbent resin (A2) obtained in Example 2, hydrophilic silica (REOLOSIL (trade name) QS-20, available from Tokuyama Corporation) was mixed in the same manner as in Example 3 to obtain a water-absorbent resin (A4).

[Example 5]

(Monomer composition preparation step)

A monomer composition (a3) was obtained by preparing a monomer composition in the same manner as in Example 1 except for the following points in (Monomer composition preparation step) of Example 1:

- the amount of 10 mass% polyethylene glycol diacrylate aqueous solution (molecular weight: 523) used was changed to 24.32 g (0.09 mol% with respect to the monomer); and
- the amount of deionized water (ion-exchanged water) used was changed to 328.1 g.

(Polymerization step)

A crosslinked hydrogel polymer (b2) was obtained by performing polymerization in the same manner as in Example 1 except that the monomer composition (a3) was used instead of the monomer composition (a2) in (Polymerization step) of Example 1.

(Hydrogel grinding step)

A particulate hydrogel (c1') was obtained by performing (first gel grinding), (second gel grinding), and (third gel grinding) in the same manner as in (Hydrogel grinding step) of Example 1 except that the crosslinked hydrogel polymer (b2) was used instead of the crosslinked hydrogel polymer (b1). Further, the particulate hydrogel (c1') obtained by the third gel grinding was further subjected to gel grinding (fourth gel grinding) while supplying hot water and water vapor in the same manner, thereby obtaining a particulate hydrogel (c4). The obtained particulate hydrogel (c4) had a Solid D50 of 120 μm.

(Drying step of particulate hydrogel)

The obtained particulate hydrogel (c4) was dried in the same manner as in (Drying step of particulate hydrogel) of Example 1 to obtain a dried product (A'5).

(Pulverizing and classification steps of dried product)

The obtained dried product (A'5) was pulverized and classified in the same manner as in (Pulverizing and classification steps of dried product) in Example 1 to obtain a water-absorbent resin (A5).

(Addition step)

With the obtained water-absorbent resin (A5), hydrophilic silica (REOLOSIL (trade name) QS-20, available from Tokuyama Corporation) was mixed in the same manner as in Example 3 to obtain a water-absorbent resin (A6).

[Example 6]

(Monomer composition preparation step)

A monomer composition (a2) was obtained in the same manner as in (Monomer composition preparation step) of Example 1.

(Polymerization step)

A crosslinked hydrogel polymer (b1) was obtained in the same manner as in (Polymerization step) of Example 1.

(Hydrogel grinding step)

The crosslinked hydrogel polymer (b1) was subjected to gel grinding using a twin-screw kneader including a main body (barrel) having two built-in rotating shafts rotating in the same direction as a gel grinder, thereby obtaining a particulate hydrogel (c5). Each of the rotating shafts is provided with a circular disk which mainly acts as a grinding means. The barrel had a jacket structure, and had a gas inlet which penetrated the jacket and through which water vapor was charged into the main body.
First, a heating medium at 105°C was circulated inside the jacket, and the temperature inside the main body (barrel) was maintained at 105°C. Thereafter, the rotation speed was set to 50 rpm, and the hydrogel (b1) was charged into the inlet of the twin-screw kneader at a supply rate of 0.25 kg/min to perform gel grinding, thereby obtaining a particulate hydrogel (c5). At that time, water at 90°C and a 10 mass% aqueous solution of lauryl dimethylaminoacetic acid betaine as a gel fluidizer were supplied simultaneously with the crosslinked hydrogel polymer (b1), and water vapor at 0.6 MPa was further supplied from the gas inlet. The amount of water at 90°C supplied was 11 mass% with respect to the solid content of the crosslinked hydrogel polymer (b1). The amount of water vapor at 0.6 MPa charged was 24 mass% with respect to the solid content of the crosslinked hydrogel polymer (b1). The amount of lauryl dimethylaminoacetic acid betaine charged as an active ingredient was 0.08 mass% with respect to the solid content of the crosslinked hydrogel polymer (b1). The disk used for gel grinding had a diameter D of 50 mm and the minimum clearance between the barrel and the disk was 1 mm (2% of the disk diameter D). The obtained particulate hydrogel (c5) had a Solid D50 of 147 μm.

(Drying step of particulate hydrogel)

The obtained particulate hydrogel (c5) was dried in the same manner as in (Drying step of particulate hydrogel) in Example 1 to obtain a dried product (A'7).

(Pulverizing and classification steps of dried product)

The dried product (A'7) was pulverized and classified in the same manner as in (Pulverizing and classification steps of dried product) in Example 1 to obtain a water-absorbent resin (A7).

(Step of adding silica to water-absorbent resin)

With the obtained water-absorbent resin (A7), hydrophilic silica was mixed in the same manner as in (Addition step) in Example 5 to obtain a water-absorbent resin (A8).

[Example 7]

(Monomer composition preparation step)

The following materials were charged into a polypropylene container having a volume of 2 liters and mixed to prepare a monomer composition (a4):

- acrylic acid 440.1 g (6.11 mol);
- 10 mass% of polyethylene glycol diacrylate aqueous solution (molecular weight: 523) 31.94 g (0.1 mol% with respect to the monomer) as an internal crosslinking agent;
- 0.1 mass% of diethylenetriaminepentaacetic acid trisodium (DTPA•3Na) aqueous solution 25.80 g (0.0009 mol% with respect to the monomer); and
- deionized water (ion-exchanged water) 462.8 g.

Next, the temperature of the monomer composition (a4) was adjusted to 45°C in a thermostatic bath. After the temperature adjustment, 328.8 g of a 30 mass% ammonia aqueous solution at 25°C was added thereto and mixed to prepare a monomer composition (a5). At this time, the temperature of the monomer composition (a5) was raised to 91.0°C due to the neutralization heat.

(Polymerization step)

Next, 15.5 g of a 5.0 mass% sodium persulfate aqueous solution (0.053 mol% with respect to the monomer) was added to the monomer composition (a5) while stirring to obtain a monomer composition (a'5). At this time, the temperature of the monomer composition (a5) was 90.5°C. Thereafter, the monomer composition (a'5) (monomer concentration 43 mass%, neutralization percentage of acrylic acid 73 mol%) was immediately poured into a tray-shaped container (bottom surface 340 × 340 mm, height 25 mm, inner surface: Teflon (trade name) coating) made of stainless steel in an atmospheric opening system. Note that the time from the addition of the potassium hydroxide aqueous solution to the monomer composition (a4) to the pouring of the monomer composition (a'5) into the tray-shaped container was 1 minute. The tray-shaped container was heated in advance to a surface temperature of 50°C using a hot plate (NEO HOTPLATE HI-1000, available from Iuchi Seieido Co., Ltd.), and the heating was continued until the polymerization was completed. The time from the observation of the temperature rise of the monomer composition (a'5) (from the start of polymerization) to the achievement of the maximum temperature (higher than 100°C) was 10 seconds. A crosslinked hydrogel polymer (b3) was obtained by the above polymerization reaction.

(Hydrogel grinding step)

The obtained crosslinked hydrogel polymer (b3) was charged into a screw extruder to perform gel grinding. As the screw extruder, a meat chopper was used. The meat chopper had a die with a diameter of 100 mm, a hole diameter of 6.4 mm, a number of holes of 83, an opening ratio of 34.0%, and a thickness of 10 mm at the tip (extrusion port), and had a screw shaft with an outside diameter of 86 mm and a casing with an inside diameter of 88 mm. Gel grinding (first gel grinding) was performed while supplying hot water at 80°C, water vapor, and a 10 mass% aqueous solution of lauryl dimethylaminoacetic acid betaine simultaneously with the crosslinked hydrogel polymer (b3), thereby obtaining a particulate hydrogel (c5). Note that the hot water at 80°C, the water vapor, and the lauryl dimethylaminoacetic acid betaine were supplied to be 1 mass%, 1 mass%, and 0.08 mass%, respectively, as active ingredients with respect to the solid content of the crosslinked hydrogel polymer (b3). Subsequently, the particulate hydrogel (c5) obtained by the first gel grinding was further subjected to gel grinding (second gel grinding) while supplying hot water and water vapor in the same manner, thereby obtaining a particulate hydrogel (c6). The mass-average particle size (Gel D50) of the obtained particulate hydrogel (c6) was 120 μm.

(Drying step of particulate hydrogel)

The obtained particulate hydrogel (c6) was dried using a hot air dryer. The dryer was equipped with a basket (bottom size 30 cm × 20 cm) made of a wire net with a mesh size of 1.2 mm. 250 g of the particulate hydrogel (c1) was spread on the bottom surface of the basket to be substantially uniform, and hot air at 100°C was blown from below for 50 minutes, thereby obtaining a dried product (A'8).

(Pulverizing and classification steps of dried product)

The obtained dried product (A'8) was pulverized and classified in the same manner as in (Pulverizing and classification steps of dried product) in Example 1 to obtain a water-absorbent resin (A9).

(Step of adding silica to water-absorbent resin)

With the obtained water-absorbent resin (A9), hydrophilic silica was mixed in the same manner as in (Addition step) in Example 5 to obtain a water-absorbent resin (A10).

[Comparative Example 1]

(Monomer composition preparation step)

The following materials were charged into a polypropylene container having a volume of 2 liters and mixed to prepare a monomer composition (ca1):

- acrylic acid 422.0 g (5.86 mol);
- 10 mass% polyethylene glycol diacrylate aqueous solution (molecular weight: 523) as an internal crosslinking agent 61.26 g (0.2 mol% with respect to the monomer);
- 0.1 mass% of diethylenetriaminepentaacetic acid trisodium (DTPA·3Na) aqueous solution 25.80 g (0.00096 mol% with respect to the monomer);
- 48.5 mass% sodium hydroxide aqueous solution 135.2 g; and
- deionized water (ion-exchanged water) 323.5 g.

Next, the monomer composition (ca1) was cooled with stirring. When the temperature (liquid temperature) of the monomer composition (ca1) reached 48°C, 217.3 g of a 48.5 mass% sodium hydroxide aqueous solution having a temperature adjusted to 40°C was added thereto and mixed to prepare a monomer composition (ca2). At this time, the temperature of the monomer composition (ca2) was raised to 91.5°C due to neutralization heat.

(Polymerization step)

Next, 14.9 g of a 5.0 mass% sodium persulfate aqueous solution (0.053 mol% with respect to the monomer) was added to the monomer composition (ca2) while stirring to obtain a monomer composition (ca'2). At this time, the temperature of the monomer composition (ca2) was 90°C. Thereafter, the monomer composition (ca'2) (monomer concentration 43 mass%, neutralization percentage of acrylic acid 73 mol%) was immediately poured into a tray-shaped container (bottom surface 340 × 340 mm, height 25 mm, inner surface: Teflon (trade name) coating) made of stainless steel in an atmospheric opening system. Note that the time from the addition of the 48.5 mass% sodium hydroxide aqueous solution to the monomer composition (ca2) to the pouring of the monomer composition (ca'2) into the tray-shaped container was 1 minute. The tray-shaped container was heated in advance to a surface temperature of 50°C using a hot plate (NEO HOTPLATE HI-1000, available from Iuchi Seieido Co., Ltd.), and the heating was continued until the polymerization was completed. The time from the observation of the temperature rise of the monomer composition (ca'2) (from the start of polymerization) to the achievement of the maximum temperature (higher than 100°C) was 10 seconds. A crosslinked hydrogel polymer (cb1) was obtained by the above polymerization reaction.

(Hydrogel grinding step)

The obtained crosslinked hydrogel polymer (cb1) was charged into a screw extruder to perform gel grinding. As the screw extruder, a meat chopper was used. The meat chopper had a die with a diameter of 100 mm, a hole diameter of 6.4 mm, a number of holes of 83, an opening ratio of 34.0%, and a thickness of 10 mm at the tip (extrusion port), and had a screw shaft with an outside diameter of 86 mm and a casing with an inside diameter of 88 mm. Gel grinding (first gel grinding) was performed while supplying hot water at 80°C, water vapor, and a 10 mass% aqueous solution of lauryl dimethylaminoacetic acid betaine simultaneously with the crosslinked hydrogel polymer (cb1), thereby obtaining a particulate hydrogel (cc2). Note that the hot water at 80°C, the water vapor, and the lauryl dimethylaminoacetic acid betaine were supplied to be 1 mass%, 1 mass%, and 0.08 mass%, respectively, as active ingredients with respect to the solid content of the hydrogel (cb1). Subsequently, the particulate hydrogel (cc2) obtained by the first gel grinding was further subjected to gel grinding (second gel grinding) while supplying hot water and water vapor in the same manner, thereby obtaining a particulate hydrogel (cc1). The obtained particulate hydrogel (cc1) had a Solid D50 of 140 $\mu$m.

(Drying step of particulate hydrogel)

The obtained particulate hydrogel (cc1) was dried using a hot air dryer. The dryer was equipped with a basket (bottom size 30 cm $\times$ 20cm) made of a wire net with a mesh size of 1.2 mm. 500 g of the particulate hydrogel (cc1) was spread on the bottom surface of the basket to be substantially uniform, and hot air at 190°C was blown from below for 30 minutes, thereby obtaining a dried product (cA'1).

(Pulverizing and classification steps of dried product)

The cooled dried product (cA'1) was supplied to a roll mill, pulverized, and classified using JIS standard sieves having mesh sizes of 850 $\mu$m and 150 $\mu$m. A component that passed through the 850 $\mu$m sieve but did not pass through the 150 $\mu$m sieve was collected to obtain a water-absorbent resin (cA1).

[Comparative Example 2]

With the water-absorbent resin (cA1) obtained in Comparative Example 1, hydrophilic silica (REOLOSIL (trade name) QS-20, available from Tokuyama Corporation) was mixed in the same manner as in Example 3 to obtain a water-absorbent resin (cA2).

[Comparative Example 3]

(Monomer composition preparation step)

A crosslinked hydrogel polymer (cb1) was obtained in the same manner as in Polymerization Step of (Polymerization step) of Monomer Composition of Comparative Example 1.

(Hydrogel grinding step)

Gel grinding was performed in the same manner as in (Hydrogel grinding step) in Example 6 except that the crosslinked hydrogel polymer (cb1) was used instead of the crosslinked hydrogel polymer (b1), thereby obtaining a particulate hydrogel (cc2). The obtained particulate hydrogel (cc2) had a Solid D50 of 158 $\mu$m.

(Drying step of particulate hydrogel)

The obtained particulate hydrogel (cc2) was dried in the same manner as in (Drying step of particulate hydrogel) of Comparative Example 1 to obtain a dried product (cA'3).

(Pulverizing and classification steps of dried product)

The obtained dried product (cA'3) was pulverized and classified in the same manner as in (Pulverizing and classification steps of dried product) of Comparative Example 1 to obtain a water-absorbent resin (cA3).

[Comparative Example 4]

A water-absorbent resin (cA4) was obtained according to Example 1 of JP H02-14925 B. Specifically, first, 72.1 g of acrylic acid was added to 22.2 g of deionized water. Further, 49.5 g of potassium hydroxide having a purity of 85% as a neutralizing agent and 0.01 g (0.0065 mol% with respect to the monomer) of N,N-methylenebisacrylamide as a divinyl-based compound were sequentially added thereto. By the above operation, a potassium acrylate aqueous solution having a monomer concentration of 70 mass% (neutralization degree: 75%) was prepared.

The potassium acrylate aqueous solution was kept at 70°C. 2.9 g of a 18% ammonium persulfate aqueous solution (0.5 mass% with respect to the total mass of potassium acrylate, free acrylic acid, and N,N-methylenebisacrylamide, the same applies hereinafter) and 1.7 g of a 30.6% sodium bisulfite aqueous solution (0.5 mass%) were mixed thereto. Next, the obtained mixture was poured into a tray-shaped container and spread into a layer having a thickness of about 10 mm. After about 30 seconds, the polymerization reaction was initiated and was completed in about 1 minute. The maximum temperature during the polymerization was about 120°C.

Thus, a belt-shaped dried solid of a potassium polyacrylate crosslinked product having a moisture content of 11% was obtained. The belt-shaped dried solid corresponds to a crosslinked hydrogel polymer. The belt-shaped dried solid of the potassium polyacrylate crosslinked product was pulverized into powder by using a grinder, thereby obtaining a water-absorbent resin (cA4).

[Comparative Example 5]

(Monomer composition preparation step)

A monomer composition (a2) was obtained in the same manner as in (Monomer composition preparation step) in Example 1.

(Polymerization step)

A crosslinked hydrogel polymer (b1) was obtained in the same manner as in (Polymerization step) of Example 1.

(Hydrogel grinding step)

The first gel grinding was performed in the same manner as in Example 1 except that the hole diameter of the die of the screw extruder was changed to 11.0 mm, thereby obtaining a particulate hydrogel (cc3). The obtained particulate hydrogel (cc3) had a Solid D50 of 1568 μm.

(Drying step of particulate hydrogel)

The obtained particulate hydrogel (cc3) was dried in the same manner as in (Drying step of particulate hydrogel) in Example 1 to obtain a dried product (cA'5).

(Pulverizing and classification steps of dried product)

The obtained dried product (cA'5) was pulverized and classified in the same manner as in (Pulverizing and classification steps of dried product) in Example 1 to obtain a water-absorbent resin (cA5).

(Step of adding silica to water-absorbent resin)

With the obtained water-absorbent resin (cA5), hydrophilic silica was mixed in the same manner as in (Addition step) in Example 5 to obtain a water-absorbent resin (cA6).

[Result A: Properties of Hydrogel and Water-Absorbent Resin]

The properties of the hydrogels, particulate hydrogels, and water-absorbent resins produced in Examples 1 to 7 and Comparative Examples 1 to 5 are shown in Tables 1 to 3 below. Note that the "hydrogel" in Table 1 below means a hydrogel obtained by the polymerization step and in a state before being ground in the hydrogel grinding step, that is, a crosslinked hydrogel polymer. The "particulate hydrogel" in Table 2 below means a hydrogel in a state of being ground in the hydrogel grinding step.

[Table 1]

| Table 1: Properties of hydrogel | | |
|---|---|---|
| | Type of hydrogel | Solid fraction [%] |
| Examples 1, 2, 3, 4, and 6, Comparative Example 5 | b1 | 56.5 |
| Example 5 | b2 | 55.5 |
| Comparative Examples 1, 2, and 3 | cb1 | 55.1 |

[Table 2]

| Table 2: Properties of particulate hydrogel | | | |
|---|---|---|---|
| | Type of particulate hydrogel | Solid fraction [%] | Solid D50 [μm] |
| Examples 1 and 3 | c1 | 52.2 | 150 |
| Examples 2 and 4 | c2 | 53.4 | 239 |
| Example 5 | c4 | 51.7 | 120 |
| Example 6 | c5 | 47.6 | 147 |
| Comparative Examples 1 and 2 | cc1 | 52.5 | 140 |
| Comparative Example 3 | cc2 | 46.9 | 158 |
| Comparative Example 5 | cc3 | 54 | 1568 |

[Table 3]

| Table 3: Properties of water-absorbent resin | | | | | | | | | | |
|---|---|---|---|---|---|---|---|---|---|---|
| | Type of water-absorbent resin | CRC [g/g] | 0°C Vortex [sec] | 30°C Vortex [sec] | Vortex ratio (0°C/30°C) | Ext [mass%] | GEX | D50 [μm] | Fine powder content [mass%] | Residual volatile component amount [mass%] |
| Example 1 | A1 | 28 | 13 | 4 | 3.3 | 8.5 | 21.0 | 400 | 1 | Undetected |
| Example 2 | A2 | 29.9 | 24 | 8 | 3.0 | 7.8 | 22.8 | 413 | 1 | Undetected |
| Example 3 | A3 | 28.2 | 7 | 2 | 3.5 | 8.2 | 21.5 | 400 | 1 | Undetected |
| Example 4 | A4 | 29.4 | 18 | 6 | 3.0 | 7.5 | 23.0 | 413 | 1 | Undetected |
| Example 5 | A6 | 39.8 | 15 | 6 | 2.5 | 21.3 | 18.6 | 408 | 1 | Undetected |
| Example 6 | A8 | 27 | 12 | 4 | 3.0 | 8.5 | 20.6 | 400 | 1 | Undetected |
| Example 7 | A10 | 28.3 | 24 | 6 | 4.0 | 11.5 | 18.5 | 399 | 1 | Undetected |
| Comparative Example 1 | cA1 | 26 | 60 | 10 | 6.0 | 5 | 26.7 | 398 | 1 | Undetected |
| Comparative Example 2 | cA2 | 26.2 | 39 | 7 | 5.6 | 5.2 | 26.2 | 389 | 1 | Undetected |
| Comparative Example 3 | cA3 | 26.3 | 65 | 11 | 5.9 | 5 | 26.9 | 398 | 1 | Undetected |
| Comparative Example 4 | cA4 | 29.9 | 12 | 3 | 4.0 | 33 | 13.4 | 236 | 27.1 | Undetected |
| Comparative Example 5 | cA6 | 30 | 45 | 14 | 3.2 | 6.5 | 25.1 | 403 | 1 | Undetected |

As shown in Table 3, the water-absorbent resins A1 to A4, A6, A8, and A10 produced in Examples 1 to 7 satisfy the requirements (a) to (d) and correspond to the water-absorbent resin of the present invention. The methods for producing a water-absorbent resin in Examples 1 to 7 correspond to the production method of the present invention. Accordingly, the water-absorbent resin of the present invention can be produced by the production method of the present invention.

[Examples 8 to 14 and Comparative Examples 6 to 9: Solidification time of antifreeze liquid]

The solidification time of the antifreeze liquid was measured for each of the water-absorbent resins A1 to A4, A6, A8, and A10 produced in Examples 1 to 7 and the water-absorbent resins cA1 to cA3 and cA6 produced in Comparative Examples 1 to 3 and 5. In detail, as the solidification time of the antifreeze liquid, the solidification time after 1 g of the water-absorbent resin was charged into 10 ml of a 37 mass% ethylene glycol aqueous solution in a 20-ml screw tube (outer diameter 27 mm) was measured.

Specifically, the solidification time was measured by the following method. First, 2 parts by mass of Aurora (trade name) long-life coolant (ethylene glycol concentration: 92%, available from Tokyo Fine Chemical Co., Ltd.) and 3 parts by mass of deionized water were mixed to obtain a 37 mass% ethylene glycol aqueous solution. 10 g of the obtained 37 mass% ethylene glycol aqueous solution was placed in a screw tube (outer shape: 27 mm, height: 55 mm, available from Maruemu Corporation, No. 5), and the screw tube was put on a horizontal stand. Into the screw tube, 1 g of the water-absorbent resin was charged, the 37 mass% ethylene glycol aqueous solution was allowed to swell in a stationary state, and then the time until the liquid did not ooze out when the screw tube was inclined by 90 degrees was measured as the solidification time. The temperature of the 37 mass% ethylene glycol aqueous solution at the time of measurement was set to 0°C ± 1°C and 30°C ± 1°C (corresponding to "0°C" and "30°C" in Table 4 below, respectively).

[Result B]

The solidification times of the antifreeze liquids measured in Examples 8 to 14 and Comparative Examples 6 to 9 are shown in Table 4 below.

[Table 4]

Table 4: Solidification time of antifreeze liquid (37 mass% ethylene glycol aqueous solution) for the water-absorbent resin

| | | Example 8 | Example 9 | Example 10 | Example 11 | Example 12 | Example 13 | Example 14 | Comparative Example 6 | Comparative Example 7 | Comparative Example 8 | Comparative Example 9 |
|---|---|---|---|---|---|---|---|---|---|---|---|---|
| No. of water-absorbent resin | | A1 | A2 | A3 | A4 | A6 | A8 | A10 | cA1 | cA2 | cA3 | cA6 |
| Solidification time of antifreeze liquid [sec] | 0°C | 20 | 45 | 19 | 31 | 28 | 26 | 46 | 85 | 72 | 100 | 78 |
| | 30°C | 7 | 15 | 6 | 10 | 10 | 8 | 12 | 17 | 15 | 19 | 24 |
| | Ratio (0°C/30°C) | 2.9 | 3.0 | 3.2 | 3.1 | 2.8 | 3.3 | 3.8 | 5.0 | 4.8 | 5.3 | 3.3 |

As shown in Table 4, it was confirmed that the water-absorbent resins A1 to A4, A6, A8, and A10 (Examples 8 to 14) corresponding to the water-absorbent resin of the present invention were superior in the solidification time, particularly the solidification time at a low temperature, to the water-absorbent resins cA1 to cA3 and cA6 (Comparative Examples 6 to 9) not corresponding to the water-absorbent resin of the present invention.

From the above, it can be said that the water-absorbent resin of the present invention can sufficiently swell and gel by absorption of an aqueous liquid such as an antifreeze liquid, particularly even in a low-temperature environment. As described above, the production method of the present invention can produce the water-absorbent resin of the present invention. Accordingly, it can be said that the method can produce a water-absorbent resin that can sufficiently swell and gel by absorption of an aqueous liquid such as an antifreeze liquid even in a low-temperature environment.

Industrial Applicability

A water-absorbent resin according to an embodiment of the present invention and a method for producing a water-absorbent resin according to an embodiment of the present invention can be used for producing a water-absorbent article that can sufficiently swell and gel by absorption of an aqueous liquid such as an antifreeze liquid even in a low-temperature environment.

**Claims**

1.   A water-absorbent resin satisfying the following conditions (a) to (d):

     (a) a value of 0°C Vortex being 30 seconds or shorter;
     (b) a ratio of the value of 0°C Vortex to a value of 30°C Vortex (Vortex ratio (0°C/30°C)) being 5.0 or less;
     (c) a GEX value being 17 or greater; and
     (d) a value of CRC being a value exceeding 25 g/g.

2.   The water-absorbent resin according to claim 1, comprising

     a crosslinked polymer of an acid group-containing unsaturated monomer, wherein
     at least a part of the acid group-containing unsaturated monomer is a neutralized acid group-containing unsaturated monomer, and
     the neutralized acid group-containing unsaturated monomer contains one or more salts selected from the group consisting of a potassium salt, a lithium salt, and an ammonium salt.

3.   The water-absorbent resin according to claim 2, wherein a ratio of a number of moles of the one or more salts selected from the group consisting of a potassium salt, a lithium salt, and an ammonium salt to a total number of moles of the neutralized acid group-containing unsaturated monomer is 50 mol% or more and 100 mol% or less.

4.   The water-absorbent resin according to any one of claims 1 to 3, having a mass-average particle size of 50 $\mu$m or more and 600 $\mu$m or less.

5.   The water-absorbent resin according to any one of claims 1 to 4, wherein a content of a residual volatile component is 0.4 mass% or less with respect to a total mass of the water-absorbent resin.

6.   The water-absorbent resin according to any one of claims 1 to 5, wherein

     a content of a fine powder is 15 mass% or less with respect to the total mass of the water-absorbent resin, and
     the fine powder is a water-absorbent resin that passes through a sieve having a mesh size of 150 $\mu$m when the entire water-absorbent resin is classified using the sieve.

7.   A method for producing a water-absorbent resin, the method comprising a polymerization step of subjecting a monomer composition containing an acid group-containing unsaturated monomer and optionally containing a monomer other than the acid group-containing unsaturated monomer to crosslinking polymerization to obtain a crosslinked hydrogel polymer, wherein

     at least a part of the acid group-containing unsaturated monomer is a neutralized acid group-containing unsaturated monomer,

the neutralized acid group-containing unsaturated monomer contains one or more salts selected from the group consisting of a potassium salt, a lithium salt, and an ammonium salt,

a total content of the acid group-containing unsaturated monomer and the monomer other than the acid group-containing unsaturated monomer in the monomer composition is 30 mass% or more and less than 55 mass% with respect to a total mass of the monomer composition, and

a polymerization initiation temperature in the polymerization step is 60°C or higher.

8. The method for producing a water-absorbent resin according to claim 7, wherein a solid fraction in the crosslinked hydrogel polymer is 60 mass% or less with respect to a total mass of the crosslinked hydrogel polymer.

9. The method for producing a water-absorbent resin according to claim 7 or 8, further comprising a hydrogel grinding step of grinding the crosslinked hydrogel polymer to obtain a particulate hydrogel.

10. The method for producing a water-absorbent resin according to claim 9, wherein the hydrogel grinding step is a step of grinding the crosslinked hydrogel polymer in such a manner that a mass-average particle size of the particulate hydrogel in terms of solid content is 1 mm or less.

11. The method for producing a water-absorbent resin according to any one of claims 7 to 10, wherein the polymerization step is a step of polymerizing the monomer composition by aqueous solution polymerization to obtain the crosslinked hydrogel polymer.

## INTERNATIONAL SEARCH REPORT

| International application No. |
| --- |
| **PCT/JP2024/033084** |

### A. CLASSIFICATION OF SUBJECT MATTER

*C08F 2/10*(2006.01)i; *B01J 20/26*(2006.01)i; *B01J 20/28*(2006.01)i; *B01J 20/30*(2006.01)i; *C08F 220/06*(2006.01)i; *C08J 3/12*(2006.01)i
FI:    C08F2/10; B01J20/26 D; B01J20/28 Z; B01J20/30; C08J3/12 A CEY; C08F220/06

According to International Patent Classification (IPC) or to both national classification and IPC

### B. FIELDS SEARCHED

Minimum documentation searched (classification system followed by classification symbols)

C08F2/10; B01J20/26; B01J20/28; B01J20/30; C08F220/06; C08J3/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2006-143836 A (ASAHI KASEI CHEMICALS CORPORATION) 08 June 2006 (2006-06-08) claims, paragraphs [0056], [0063], examples | 1-11 |
| X | JP 9-507085 A (STOCKHAUSEN GMBH & CO. KG) 15 July 1997 (1997-07-15) claims, examples | 1-11 |
| A | JP 63-275607 A (SANYO CHEMICAL INDUSTRIES, LTD.) 14 November 1988 (1988-11-14) entire text | 1-11 |
| A | JP 8-120009 A (ARAKAWA CHEMICAL INDUSTRIES, LTD.) 14 May 1996 (1996-05-14) entire text | 1-11 |

☐ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **03 December 2024** | **17 December 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/033084**

| Patent document cited in search report | | | Publication date (day/month/year) | Patent family member(s) | | | Publication date (day/month/year) |
|---|---|---|---|---|---|---|---|
| JP | 2006-143836 | A | 08 June 2006 | (Family: none) | | | |
| JP | 9-507085 | A | 15 July 1997 | US | 5856370 | A | |
| | | | | claims, examples | | | |
| | | | | WO | 1995/017455 | A1 | |
| | | | | EP | 736060 | A1 | |
| | | | | CA | 2179775 | A1 | |
| | | | | TW | 301656 | B | |
| JP | 63-275607 | A | 14 November 1988 | (Family: none) | | | |
| JP | 8-120009 | A | 14 May 1996 | (Family: none) | | | |

Form PCT/ISA/210 (patent family annex) (July 2022)

## REFERENCES CITED IN THE DESCRIPTION

**Patent documents cited in the description**

- JP 58071907 A
- KR 101274880 B1
- KR 1020200073044 A
- US 7638570 B
- US 7098284 B
- US 7265190 B
- WO 2011126079 A
- WO 22163849 A
- WO 2013002387 A
- WO 2016204302 A
- WO 2022065365 A
- JP 2005035212 A
- JP H0214925 B